(19) Europäisches Patentamt / European Patent Office / Office européen des brevets

(11) **EP 3 703 059 A1**

(12) **EUROPEAN PATENT APPLICATION**
published in accordance with Art. 153(4) EPC

(43) Date of publication:
**02.09.2020 Bulletin 2020/36**

(21) Application number: **17933908.0**

(22) Date of filing: **04.12.2017**

(51) Int Cl.:
*G16B 20/40* (2019.01)

(86) International application number:
**PCT/CN2017/114499**

(87) International publication number:
**WO 2019/109223 (13.06.2019 Gazette 2019/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Huawei Technologies Co., Ltd.**
**Longgang District**
**Shenzhen, Guangdong 518129 (CN)**

(72) Inventors:
• **TANG, Zhongliang**
  **Shenzhen**
  **Guangdong 518129 (CN)**
• **CHUANG, Kuang Ting**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND DEVICE FOR GENERATING ALBUM TITLE**

(57)    Embodiments of this application provide a method and a device for creating an album title, and relate to the field of computer technologies, so that the created album title can better match content of a picture in an album. Specific solutions include: generating an album label of a first album based on content of a picture in the first album; determining a first language model library based on the album label of the first album, where the first language model library corresponds to the label of the first album, and includes a plurality of primitive word segments; searching the first language model library for a primitive word segment that matches the album label of the first album; and creating an album title of the first album based on the matched primitive word segment.

FIG. 3

**Description**

**TECHNICAL FIELD**

This application relates to the field of computer technologies, and in particular, to a method and a device for creating an album title.

**BACKGROUND**

With popularization of smart terminals, users habitually use terminals (for example, a mobile phone) to take pictures, to record moments of their lives. To help the users manage the pictures on the terminals, a picture management function is configured in a "photo" application or another similar application of the terminals. For example, the "photo" application on the terminals may classify the pictures on the terminals based on information such as a time and a location of taking a picture, to generate an album, and automatically set an album title or add description information for the album based on the information such as the time and the location of taking a picture in the album.

However, the album title created based on the information such as the time and the location of taking a picture cannot reflect picture content in the album. In other words, the created album title comparatively does not match the picture content in the album.

**SUMMARY**

Embodiments of this application provide a method and a device for creating an album title, so that the created album title can better match content of a picture in an album.

According to a first aspect, an embodiment of this application provides a method for creating an album title, where the method includes: generating an album label of a first album based on content of a picture in the first album; determining a first language model library based on the album label of the first album, where the first language model library corresponds to the label of the first album, and includes a plurality of primitive word segments; searching the first language model library for a primitive word segment that matches the album label of the first album; and creating an album title of the first album based on the matched primitive word segment.

In this embodiment of this application, the album label of the first album is generated based on the content of the picture in the first album. The album label of the first album may be used to describe the content of the picture in the first album. Therefore, a device creates the album title of the first album based on the primitive word segments in the first language model library corresponding to the album label of the first album, so that the created album title can better match the content of the first album.

In a possible design manner, the determining a first language model library based on the album label of the first album includes: determining the first language model library from a prestored language model library based on the album label of the first album, where the prestored language model library includes a language model library of each of a preset plurality of scenarios, and the first language model library is a language model library of a scenario corresponding to the album label of the first album.

In this embodiment of this application, the plurality of scenarios may be preset, and a language model library is stored for each of the preset plurality of scenarios. Each language model library includes primitive word segments used to describe a picture corresponding to the scenario. For example, the preset plurality of scenarios may include a travel scenario, a food scenario, a sports scenario, a shopping scenario, an entertainment scenario, a parent-child activity scenario, and the like. That the first language model library corresponds to the label of the first album may specifically be: The first language model library is a language model library of a scenario corresponding to the album label of the first album.

In another possible design manner, the first language model library not only includes the plurality of primitive word segments, but also includes a conditional probability of each primitive word segment to another primitive word segment. The conditional probability of one primitive word segment to another primitive word segment is: in a phrase included in the first language model library, when the another primitive word segment occurs in the phrase, a probability that the one primitive word segment occurs after the another primitive word segment in the phrase. The searching the first language model library for a primitive word segment that matches the album label of the first album includes: searching, in the plurality of primitive word segments in the first language model library, for a first primitive word segment that matches the album label of the first album; and searching, in the plurality of primitive word segments in the first language model library, for a second primitive word segment, where a conditional probability of the second primitive word segment to the first primitive word segment is greater than a first preset threshold. The creating an album title of the first album based on the matched primitive word segment includes: using a phrase including the first primitive word and the second primitive word as the album title of the first album.

A conditional probability of other primitive word segments to the first primitive word segment in the first language model library is used as an example. The conditional probability of other primitive word segments to the first primitive word segment is: in the phrases included in the first language model library, when the first primitive word segment occurs in the phrases, a probability that the other primitive word segments occur after the first primitive word segment in the phrases. In other words, the conditional probability of other primitive word segments to the first primitive word segment may reflect the probability that the other primitive word segments occurs after the first primitive word segment in the first language model library and forms a phrase with the first primitive word segment. In this way, after determining the first primitive word that matches the album label of the first album, the device may determine the second primitive word whose conditional probability to the first primitive word segment is greater than the first preset threshold, and use the phrase including the first primitive word and the second primitive word as the album title of the first album.

In another possible design manner, the device may separately collect, for each of the preset plurality of scenarios, corpus data to obtain a plurality of corpora. In other words, each scenario may include a corpus. Specifically, before the determining a first language model library based on the album label of the first album, the method in this embodiment of this application may further include: obtaining a corpus of each of the preset plurality of scenarios, where the corpus of the scenario includes a plurality of pieces of corpus data of the scenario; performing the following operations on each corpus: performing word segmentation on all corpus data in one corpus to obtain a plurality of third primitive word segments; collecting statistics on a frequency at which each of the plurality of third primitive word segments occurs in the corpus and a frequency at which each of a plurality of phrase pairs occurs in the corpus, where the phrase pair includes two third primitive words adjacent in a preset order in same corpus data; calculating, based on the frequency at which each third primitive word segment occurs in the corpus and the frequency at which each phrase pair occurs in the corpus, a conditional probability of each third primitive word segment to other third primitive words; and generating a language model library corresponding to a scenario of the corpus, where the corresponding language model library includes the plurality of third primitive word segments and the conditional probability of each third primitive word segment to other third primitive word segments.

In this embodiment of this application, the device may separately collect, for each of the preset plurality of scenarios, the corpus data to obtain the plurality of corpora. Then, the device may analyze corpus data in each corpus to obtain a language model library corresponding to each scenario.

In another possible design manner, the generating an album label of a first album based on content of a picture in the first album includes: generating the first album, where the first album includes a plurality of pictures; generating a picture label of a corresponding picture based on each picture in the first album; and collecting statistics on a total quantity of obtained picture labels, and a quantity of each type of picture labels in all the obtained picture labels; and calculating a ratio of the quantity of each type of picture labels to the total quantity of picture labels, and determining a picture label whose ratio is greater than a second preset threshold as the album label of the first album.

The album label of the first album is the picture label that is in picture labels of the pictures in the first album and whose ratio of the quantity to the total quantity of picture labels is greater than the second preset threshold. In other words, the album label of the first album is a picture label that occurs most frequently in the picture labels of the first album. Therefore, the album label of the first album may reflect content of the pictures in the first album.

In another possible design manner, a user may manually set an album title for an album. In this embodiment of this application, the device may further analyze the album title manually set by the user, and update a language model library by using an analysis result in this embodiment of this application. Specifically, the method in this embodiment of this application further includes: obtaining an album title set by the user for a second album and performing word segmentation on the album title of the second album, to obtain a plurality of fourth primitive word segments; generating an album label of the second album based on content of a picture in the second album; determining a second language model library based on the album label of the second album, where the second language model library corresponds to the album label of the second album; and updating the second language model library based on the plurality of fourth primitive word segments.

In this embodiment of this application, the device may further analyze the album title manually set by the user, and update the language model library by using the analysis result. In this way, the primitive word segments and the conditional probabilities of the primitive word segments in the language model library in this embodiment of this application may vary with the user's preference and habit. Therefore, the album title created based on the primitive word segments in the updated language model library better matches a scenario in which a picture in the album is taken, and is more suitable for the content of the corresponding album and the user's language style.

In another possible design manner, different users describe or explain a same thing (for example, an album) in their different preferred language styles. Based on this, before the determining the first language model library from a prestored language model library based on the album label of the first album, the method in this embodiment of this application further includes: obtaining a first language style, where the first language style is a language style preferred by a user. Each scenario includes a plurality of language model libraries, primitive word segments in each language model library correspond to one language style, primitive word segments in different language model libraries correspond to different language styles, and primitive word segments in the first language model library correspond to the first language style.

The device may periodically collect statistics on a language style of text information and/or voice information entered by the user on the device, to update the language style stored on the device in a timely manner.

In another possible design manner, the obtaining a first language style includes: collecting statistics on a style of editing a text by the user, and determining the first language style; or displaying a style selection screen, where the style selection screen includes a plurality of language style options, and determining, in response to a selection operation performed by the user on any of the plurality of language style options, a language style corresponding to the language style option selected by the user as the first language style.

Optionally, after obtaining the first language style, the device may store the first language style on the device. Then, when creating the album title for the album, the device may directly obtain the first language style from the device, and the device does not need to collect, when creating the album title, the statistics on the language style of the text information and/or the voice information entered by the user on the device, or does not need to display the style selection screen, to determine the first language style. A language style stored on a terminal is directly obtained when an album title is created for an album. This can reduce an amount of calculating by the device when the device creates the album title, and improve efficiency of creating the album title.

In another possible design manner, in this embodiment of this application, the first language model library is the language model library of the scenario corresponding to the album label of the first album, and the primitive word segments in the first language model library correspond to the first language style. Specifically, before the determining the first language model library from a prestored language model library based on the album label of the first album, the method in this embodiment of this application further includes: obtaining a plurality of corpora of each scenario, where each of the plurality of corpora includes corpus data of one language style, and corpus data included in different corpora has different language styles; performing the following operations on each corpus: performing word segmentation on all corpus data in one corpus to obtain a plurality of fifth primitive word segments; collecting statistics on a frequency at which each of the plurality of fifth primitive word segments occurs in the corpus and a frequency at which each of a plurality of phrase pairs occurs in the corpus, where the phrase pair includes two fifth primitive words adjacent in a preset order in same corpus data; calculating, based on the frequency at which each fifth primitive word occurs in the corpus and the frequency at which each phrase pair occurs in the corpus, a conditional probability of each fifth primitive word segment to other fifth primitive word segments; and generating a scenario of the corpus and a language model library corresponding to a language style of the corpus, where the corresponding language model library includes the plurality of fifth primitive word segments and the conditional probability of each fifth primitive word segment to other fifth primitive word segments.

In this embodiment of this application, when creating the album title of the first album, the device may consider not only the scenario determined based on the album label of the first album, but also the language style preferred by the user. The created album title can not only better match the content of the first album, but also be more suitable for the user's language style.

According to a second aspect, an embodiment of this application provides an apparatus for creating an album title, where the apparatus includes a label generation unit, a determining unit, a search unit, and a title creation unit. The label generation unit is configured to generate an album label of a first album based on content of a picture in the first album; the determining unit is configured to determine a first language model library based on the album label that is of the first album and that is generated by the label generation unit, where the first language model library corresponds to the label of the first album, and includes a plurality of primitive word segments; the search unit is configured to search the first language model library determined by the determining unit for a primitive word segment that matches the album label of the first album; and the title creation unit is configured to create an album title of the first album based on the matched primitive word segment found by the search unit.

In another possible design manner, the determining unit is specifically configured to: determine the first language model library from a prestored language model library based on the album label that is of the first album and that is generated by the label generation unit; and the prestored language model library includes a language model library of each of a preset plurality of scenarios, and the first language model library is a language model library of a scenario corresponding to the album label of the first album.

In another possible design manner, the first language model library determined by the determining unit further includes a conditional probability of one primitive word segment to another primitive word segment in the first language model library; and the conditional probability of one primitive word segment to another primitive word segment is: in a phrase included in the first language model library, when the another primitive word segment occurs in the phrase, a probability that the one primitive word segment occurs after the another primitive word segment in the phrase. The search unit is specifically configured to: search, in the plurality of primitive word segments that are in the first language model library and that are determined by the determining unit, for a first primitive word segment that matches the album label of the first album; and search, in the plurality of primitive word segments that are in the first language model library and that are determined by the determining unit, for a second primitive word segment, where a conditional probability of the second primitive word segment to the first primitive word segment is greater than a first preset threshold. The title creation unit is specifically configured to use a phrase including the first primitive word and the second primitive word that are found by the search unit as the album title of the first album.

In another possible design manner, the apparatus further includes a corpus obtaining unit and a model generation unit. The corpus obtaining unit is configured to: before the determining unit determines the first language model library based on the album label of the first album, obtain a corpus of each of the preset plurality of scenarios, where the corpus of the scenario includes a plurality of pieces of corpus data of the scenario. The model generation unit is configured to perform the following operations on each corpus obtained by the corpus obtaining unit: performing word segmentation on all corpus data in one corpus to obtain a plurality of third primitive word segments; collecting statistics on a frequency at which each of the plurality of third primitive word segments occurs in the corpus and a frequency at which each of a plurality of phrase pairs occurs in the corpus, where the phrase pair includes two third primitive words adjacent in a preset order in same corpus data; calculating, based on the frequency at which each third primitive word segment occurs in the corpus and the frequency at which each phrase pair occurs in the corpus, a conditional probability of each third primitive word segment to other third primitive words; and generating a language model library corresponding to a scenario of the corpus, where the corresponding language model library includes the plurality of third primitive word segments and the conditional probability of each third primitive word segment to other third primitive word segments.

In another possible design manner, the apparatus further includes a word segment obtaining unit and an update unit. The word segment obtaining unit is configured to obtain an album title set by a user for a second album and perform word segmentation on the album title of the second album, to obtain a plurality of fourth primitive word segments. The label generation unit is further configured to generate an album label of the second album based on content of a picture in the second album. The determining unit is further configured to determine a second language model library based on the album label that is of the second album and that is generated by the label generation unit, where the second language model library corresponds to the album label of the second album. The update unit is configured to update the second language model library determined by the determining unit based on the plurality of fourth primitive word segments obtained by the word segment obtaining unit.

In another possible design manner, the apparatus further includes a style obtaining unit. The style obtaining unit is configured to: before the determining unit determines the first language model library from the prestored language model library based on the album label of the first album, obtain a first language style, where the first language style is a language style preferred by a user. Each scenario includes a plurality of language model libraries, primitive word segments in each language model library correspond to one language style, primitive word segments in different language model libraries correspond to different language styles, and primitive word segments in the first language model library correspond to the first language style.

In another possible design manner, the apparatus further includes a corpus obtaining unit and a model generation unit. The corpus obtaining unit is configured to: before the determining unit determines the first language model library from the prestored language model library based on the album label of the first album, obtain a plurality of corpora of each scenario, where each of the plurality of corpora includes corpus data of one language style, and corpus data included in different corpora has different language styles. The model generation unit is configured to perform the following operations on each corpus generated by the corpus obtaining unit: performing word segmentation on all corpus data in one corpus to obtain a plurality of fifth primitive word segments; collecting statistics on a frequency at which each of the plurality of fifth primitive word segments occurs in the corpus and a frequency at which each of a plurality of phrase pairs occurs in the corpus, where the phrase pair includes two fifth primitive words adjacent in a preset order in same corpus data; calculating, based on the frequency at which each fifth primitive word occurs in the corpus and the frequency at which each phrase pair occurs in the corpus, a conditional probability of each fifth primitive word segment to other fifth primitive word segments; and generating a scenario of the corpus and a language model library corresponding to a language style of the corpus, where the corresponding language model library includes the plurality of fifth primitive word segments and the conditional probability of each fifth primitive word segment to other fifth primitive word segments.

In another possible design manner, that the label generation unit is configured to generate an album label of a first album based on content of a picture in the first album includes: the label generation unit is specifically configured to: generate the first album, where the first album includes a plurality of pictures; generate a picture label of a corresponding picture based on each picture in the first album; and collect statistics on a total quantity of obtained picture labels, and a quantity of each type of picture labels in all the obtained picture labels; and calculate a ratio of the quantity of each type of picture labels to the total quantity of picture labels, and determine a picture label whose ratio is greater than a second preset threshold as the album label of the first album.

In another possible design manner, the style obtaining unit is specifically configured to: collect statistics on a style of editing a text by the user, and determining the first language style; or display a style selection screen, where the style selection screen includes a plurality of language style options, and determine, in response to a selection operation performed by the user on any of the plurality of language style options, a language style corresponding to the language style option selected by the user as the first language style.

According to a third aspect, an embodiment of this application provides a device, including a processor, a memory, and a display. The memory and the display are coupled to the processor. The memory is configured to store computer program code. The computer program code includes a computer instruction. The memory includes a non-volatile storage medium. When the processor executes the computer instruction, the processor is configured to generate an album label of a first album based on content of a picture in the first album; determine a first language model library based on the album label of the first album, where the first language model library corresponds to the label of the first album, and includes a plurality of primitive word segments; search the first language model library for a primitive word segment that matches the album label of the first album; and create an album title of the first album based on the matched primitive word segment. The display is configured to display the picture in the first album according to an instruction of the processor, and display the album title that is of the first album and that is generated by the processor.

In a possible design manner, the memory is further configured to store the first language model library.

In another possible design manner, that the processor is configured to determine a first language model library based on the album label of the first album includes: the processor is configured to determine the first language model library from a prestored language model library based on the album label of the first album, where the prestored language model library includes a language model library of each of a preset plurality of scenarios, and the first language model library is a language model library of a scenario corresponding to the album label of the first album.

In another possible design manner, the first language model library further includes a conditional probability of one primitive word segment to another primitive word segment in the first language model library; and the conditional probability of one primitive word segment to another primitive word segment is: in a phrase included in the first language model library, when the another primitive word segment occurs in the phrase, a probability that the one primitive word segment occurs after the another primitive word segment in the phrase. That the processor is configured to search the first language model library for a primitive word segment that matches the album label of the first album includes: the processor is configured to search, in the plurality of primitive word segments in the first language model library, for a first primitive word segment that matches the album label of the first album; and search, in the plurality of primitive word segments in the first language model library, for a second primitive word segment, where a conditional probability of the second primitive word segment to the first primitive word segment is greater than a first preset threshold. That the processor is configured to create an album title of the first album based on the matched primitive word segment includes: the processor is configured to use a phrase including the first primitive word and the second primitive word as the album title of the first album.

In another possible design manner, the processor is further configured to: before determining the first language model library based on the album label of the first album, obtain a corpus of each of the preset plurality of scenarios, where the corpus of the scenario includes a plurality of pieces of corpus data of the scenario; perform the following operations on each corpus: performing word segmentation on all corpus data in one corpus to obtain a plurality of third primitive word segments; collecting statistics on a frequency at which each of the plurality of third primitive word segments occurs in the corpus and a frequency at which each of a plurality of phrase pairs occurs in the corpus, where the phrase pair includes two third primitive words adjacent in a preset order in same corpus data; calculating, based on the frequency at which each third primitive word segment occurs in the corpus and the frequency at which each phrase pair occurs in the corpus, a conditional probability of each third primitive word segment to other third primitive words; and generating a language model library corresponding to a scenario of the corpus, where the corresponding language model library includes the plurality of third primitive word segments and the conditional probability of each third primitive word segment to other third primitive word segments.

In another possible design manner, the processor is further configured to obtain an album title set by a user for a second album and perform word segmentation on the album title of the second album, to obtain a plurality of fourth primitive word segments; generate an album label of the second album based on content of a picture in the second album; determine a second language model library based on the album label of the second album, where the second language model library corresponds to the album label of the second album; and update the second language model library based on the plurality of fourth primitive word segments.

In another possible design manner, the processor is further configured to: before determining the first language model library from the prestored language model library based on the album label of the first album, obtain a first language style, where the first language style is a language style preferred by a user. Each scenario includes a plurality of language model libraries, primitive word segments in each language model library correspond to one language style, primitive word segments in different language model libraries correspond to different language styles, and primitive word segments in the first language model library correspond to the first language style.

In another possible design manner, the processor is further configured to: before determining the first language model library from the prestored language model library based on the album label of the first album, obtain a plurality of corpora of each scenario, where each of the plurality of corpora includes corpus data of one language style, and corpus data included in different corpora has different language styles; perform the following operations on each corpus:

performing word segmentation on all corpus data in one corpus to obtain a plurality of fifth primitive word segments; collecting statistics on a frequency at which each of the plurality of fifth primitive word segments occurs in the corpus and a frequency at which each of a plurality of phrase pairs occurs in the corpus, where the phrase pair includes two fifth primitive words adjacent in a preset order in same corpus data; calculating, based on the frequency at which each fifth primitive word occurs in the corpus and the frequency at which each phrase pair occurs in the corpus, a conditional probability of each fifth primitive word segment to other fifth primitive word segments; and generating a scenario of the corpus and a language model library corresponding to a language style of the corpus, where the corresponding language model library includes the plurality of fifth primitive word segments and the conditional probability of each fifth primitive word segment to other fifth primitive word segments.

In another possible design manner, the memory is further configured to store the corpus.

In another possible design manner, that the processor is configured to generate an album label of a first album based on content of a picture in the first album includes: the processor is configured to generate the first album, where the first album includes a plurality of pictures; generate a picture label of a corresponding picture based on each picture in the first album; and collect statistics on a total quantity of obtained picture labels, and a quantity of each type of picture labels in all the obtained picture labels; and calculate a ratio of the quantity of each type of picture labels to the total quantity of picture labels, and determine a picture label whose ratio is greater than a second preset threshold as the album label of the first album.

In another possible design manner, that the processor is configured to obtain a first language style includes: the processor is configured to collect statistics on a style of editing a text by the user, and determine the first language style. Alternatively, the display is further configured to display a style selection screen, where the style selection screen includes a plurality of language style options. The processor is further configured to determine, in response to a selection operation performed by the user on any of the plurality of language style options displayed by the display, a language style corresponding to the language style option selected by the user as the first language style.

According to a fourth aspect, an embodiment of this application provides a control device, where the control device includes a processor and a memory. The memory is configured to store computer program code. The computer program code includes a computer instruction. When executing the computer instruction, the processor performs the method for creating an album title according to the first aspect and any of the possible design manners of the first aspect.

According to a fifth aspect, an embodiment of this application provides a computer storage medium, including a computer instruction. When the computer instruction runs on a device, the device is enabled to perform the method for creating an album title according to the first aspect and any of the possible design manners of the first aspect.

According to a sixth aspect, an embodiment of this application provides a computer program product. When the computer program product runs on a computer, the computer is enabled to perform the method for creating an album title according to the first aspect and any of the possible design manners of the first aspect.

It may be understood that, the apparatus in the second aspect and the possible design manners of the second aspect, the device in the third aspect and the possible design manners of the third aspect, the control device in the fourth aspect, the computer storage medium in the fifth aspect, and the computer program product in the sixth aspect provided above are all configured to perform the corresponding methods. Therefore, for advantageous effects that the apparatus, the device, the control device, the computer storage medium, and the computer program product can achieve, refer to advantageous effects in the corresponding methods provided above. Details are not described again herein.

## BRIEF DESCRIPTION OF DRAWINGS

FIG. 1 is a schematic diagram of a hardware structure of a device according to an embodiment of this application;
FIG. 2 is a schematic diagram 1 of a system principle framework of a method for creating an album title according to an embodiment of this application;
FIG. 3 is a flowchart 1 of a method for creating an album title according to an embodiment of this application;
FIG. 4 is a schematic diagram 1 of an example of a display screen of a mobile phone according to an embodiment of the present invention;
FIG. 5 is a schematic diagram of a normal distribution curve according to an embodiment of this application;
FIG. 6 is a flowchart 2 of a method for creating an album title according to an embodiment of this application;
FIG. 7 is a schematic diagram 2 of a system principle framework of a method for creating an album title according to an embodiment of this application;
FIG. 8 is a schematic diagram of an example of a language model library according to an embodiment of this application;
FIG. 9 is a flowchart 3 of a method for creating an album title according to an embodiment of this application;
FIG. 10 is a schematic diagram 2 of an example of a display screen of a mobile phone according to an embodiment of the present invention;

FIG. 11 is a schematic diagram 3 of an example of a display screen of a mobile phone according to an embodiment of the present invention;

FIG. 12 is a flowchart 4 of a method for creating an album title according to an embodiment of this application;

FIG. 13 is a schematic diagram 3 of a system principle framework of a method for creating an album title according to an embodiment of this application;

FIG. 14 is a schematic diagram 1 of an example of a correspondence between a corpus, a dictionary, and a language model library according to an embodiment of this application;

FIG. 15 is a schematic diagram 4 of a system principle framework of a method for creating an album title according to an embodiment of this application;

FIG. 16 is a schematic diagram 2 of an example of a correspondence between a corpus, a dictionary, and a language model library according to an embodiment of this application;

FIG. 17 is a schematic diagram 1 of a structure of an apparatus for creating an album title according to an embodiment of this application;

FIG. 18 is a schematic diagram 2 of a structure of an apparatus for creating an album title according to an embodiment of this application; and

FIG. 19 is a schematic diagram of a structure of a device according to an embodiment of this application.

## DESCRIPTION OF EMBODIMENTS

The following terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of this application, unless otherwise stated, "a plurality of" means at least two.

Embodiments of this application provide a method and a device for creating an album title, which may be applied to a process in which a device sets an album title for an album. Specifically, the method and the device may be applied to a process in which the device sets album titles for different albums after classifying a plurality of pictures into the albums.

In this embodiment of this application, creating an album title of a first album is used as an example. The device may generate a label of the first album based on content of a picture in the first album, determine a first language model library based on the label of the first album, and create the album title of the first album based on primitive word segments that are in the first language model library and that match the album label of the first album. The created album title can better match a scenario in which the picture in the album is taken. The album label of the first album is generated based on the content of the picture in the first album. The album label of the first album may be used to describe the content of the picture in the first album. Therefore, the album title of the first album created by the device based on the album label of the first album can better match the content of the first album.

The primitive word segment in this embodiment of this application is a character or a word that may be used to describe the album title of the album. The device may obtain the character or word used to describe the album title by performing word segmentation on "the album title (namely, corpus data) used when people name the album." For example, after collecting and obtaining album titles "backpacker traveling around the world" and "delicious food", the device may perform word segmentation on "backpacker traveling around the world" and "delicious food", to obtain primitive word segments "backpacker", "traveling", and "around the world", and "delicious" and "food". For a specific method for collecting the corpus data by the device, refer to detailed descriptions of S1201 and S1201a in the embodiments of this application. Details are not described herein.

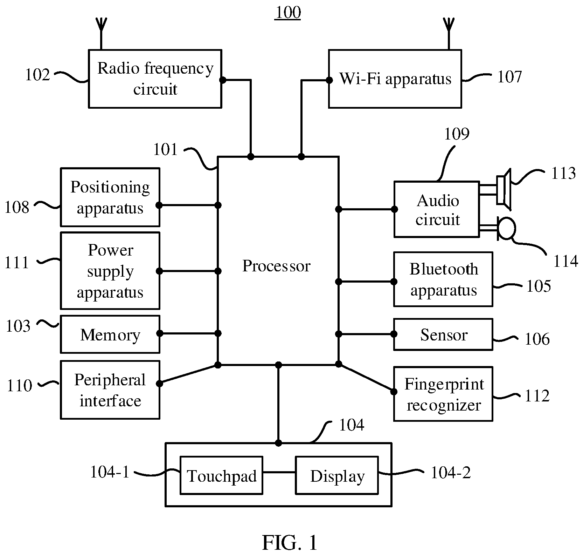

For example, the device in the embodiments of this application may be a terminal device such as a mobile phone (a mobile phone 100 shown in FIG. 1), a tablet computer, a personal computer (Personal Computer, PC), a personal digital assistant (personal digital assistant, PDA), a netbook, or a wearable electronic device.

For example, the device may be configured to manage a picture stored on the device, and perform the method provided in the embodiments of this application to create an album title for an album including the picture. Alternatively, a client configured to manage a picture may be installed on the device. After a picture management account is logged in, the client may manage a picture stored on a cloud server. In addition, the client may be further configured to perform the method provided in the embodiments of this application to create an album title for an album including the picture.

Alternatively, the device in the embodiments of this application may be a cloud server configured to store and manage a picture. The cloud server may receive a picture uploaded by a terminal, and perform the method provided in the embodiments of this application to create an album title based on an album including the picture. A specific form of the device is not particularly limited in the embodiments of this application.

For example, the device is the mobile phone 100 shown in FIG. 1. The mobile phone 100 may specifically include components such as a processor 101, a radio frequency (Radio Frequency, RF) circuit 102, a memory 103, a touchscreen 104, a Bluetooth apparatus 105, one or more sensors 106, a Wi-Fi apparatus 107, a positioning apparatus 108, an audio circuit 109, a peripheral interface 110, and a power supply apparatus 111. These components may communicate by using one or more communications buses or signal cables (not shown in FIG. 1). A person skilled in the art may understand that the hardware structure shown in FIG. 1 does not constitute a limitation on the mobile phone, and the mobile phone 100 may include more or fewer components than those shown in the figure, may combine some components, or may have different component arrangements.

The following describes in detail the components of the mobile phone 100 with reference to FIG. 1.

The processor 101 is a control center of the mobile phone 100. The processor 101 is connected to parts of the mobile phone 100 by using various interfaces and cables, runs or executes an application program stored in the memory 103, and invokes data stored in the memory 103, to perform various functions of the mobile phone 100 and process data. In some embodiments, the processor 101 may include one or more processing units. In some embodiments of the embodiments of this application, the processor 101 may further include a fingerprint verification chip, configured to verify a collected fingerprint.

The radio frequency circuit 102 may be configured to receive and send a radio signal in an information receiving and sending process or a call process. Particularly, after receiving downlink data from a base station, the radio frequency circuit 102 may send the downlink data to the processor 101 for processing, and sends related uplink data to the base station. Generally, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communications standard or protocol, including but not limited to global system for mobile communications, general packet radio service, code division multiple access, wideband code division multiple access, long term evolution, email, SMS message service, and the like.

The memory 103 is configured to store an application program and data. The processor 101 runs the application program and the data stored in the memory 103, to execute various functions of the mobile phone 100 and process data. The memory 103 mainly includes a program storage area and a data storage area. The program storage area may store an operating system, and an application program required by at least one function (for example, a sound playing function or an image playing function). The data storage area may store data (for example, audio data or a phonebook) created based on use of the mobile phone 100. In addition, the memory 103 may include a highspeed random access memory (RAM), and may further include a non-volatile memory such as a magnetic disk storage device, a flash memory, or another volatile solid-state storage device. The memory 103 may store various operating systems such as an iOS® operating system and an Android® operating system. The memory 103 may be standalone, and is connected to the processor 101 by using the communication bus; or the memory 103 may be integrated with the processor 101.

The touchscreen 104 may specifically include a touchpad 104-1 and a display screen 104-2.

The touchpad 104-1 can collect a touch event performed by a user on or near the mobile phone 100 (for example, an operation performed by the user on the touchpad 104-1 or near the touchpad 104-1 by using any suitable object such as a finger or a stylus), and send collected touch information to another component (such as the processor 101). The touch event of the user near the touch panel 104-1 may be referred to as floating touch control. The floating touch control may mean that the user does not need to directly touch the touch panel to select, move, or drag a target (for example, an icon), and instead, the user only needs to be near a device to implement a desired function. In addition, the touchpad 104-1 may be implemented in a plurality of types such as a resistive type, a capacitive type, an infrared type, or a surface acoustic wave type.

The display (also referred to as a display screen) 104-2 may be configured to display information entered by the user or information provided for the user, and menus of the mobile phone 100. The display screen 104-2 can be configured in a form of a liquid crystal display, an organic light emitting diode, or the like. The touchpad 104-1 may cover the display screen 104-2. When detecting a touch event on or near the touchpad 104-1, the touchpad 104-1 transfers the touch event to the processor 101 to determine a type of the touch event. Then, the processor 101 can provide corresponding visual output on the display screen 104-2 based on the type of the touch event. Although in FIG. 1, the touch panel 104-1 and the screen 104-2 are used as two independent components to implement input and output functions of the mobile phone 100, in some embodiments, the touch panel 104-1 and the display screen 104-2 may be integrated to implement the input and output functions of the mobile phone 100. It may be understood that the touchscreen 104 is formed by stacking a plurality of layers of materials. In the embodiments of this application, only the touchpad (layer) and the display screen (layer) are displayed, and another layer is not set forth in the embodiments of this application. In addition, the touchpad 104-1 may be disposed on a front side of the mobile phone 100 in a full panel form, and the display screen 104-2 may also be disposed on the front side of the mobile phone 100 in a full panel form. In this way, a bezel-less structure can be implemented on the front side of the mobile phone.

In addition, the mobile phone 100 may further have a fingerprint recognition function. For example, a fingerprint recognizer 112 may be disposed on a back side of the mobile phone 100 (for example, below a rear-facing camera), or the fingerprint recognizer 112 may be disposed on the front side of the mobile phone 100 (for example, below the touchscreen 104). For another example, a fingerprint collection device 112 may be disposed on the touchscreen 104 to implement the fingerprint recognition function. In other words, the fingerprint collection device 112 and the touchscreen 104 may be integrated to implement the fingerprint recognition function of the mobile phone 100. In this case, the fingerprint collection device 112 is disposed on the touchscreen 104, and may be a part of the touchscreen 104, or may be disposed on the touchscreen 104 in another manner. In the embodiments of this application, a main component of the fingerprint collection device 112 is a fingerprint sensor. The fingerprint sensor may use any type of sensing technology, including but not limited to an optical, capacitive, piezoelectric, or ultrasonic sensing technology.

The mobile phone 100 may further include a Bluetooth apparatus 105, configured to exchange data between the mobile phone 100 and another short-range device (for example, a mobile phone or a smart watch). In the embodiments of this application, the Bluetooth apparatus may be an integrated circuit, a Bluetooth chip, or the like.

The mobile phone 100 may further include at least one type of sensor 106, such as a light sensor, a motion sensor, or another sensor. Specifically, the light sensor may include an ambient light sensor and a proximity sensor. The ambient light sensor may adjust luminance of the display of the touchscreen 104 based on intensity of ambient light. The proximity sensor may power off the display when the mobile phone 100 is moved to an ear. As one type of the motion sensor, an accelerometer sensor may detect acceleration values in various directions (usually on three axes). The accelerometer sensor may detect a value and a direction of gravity when the accelerometer sensor is stationary, and may be applied to an application for recognizing a mobile phone posture (such as switching between a landscape screen and a vertical screen, a related game, and magnetometer posture calibration), a function related to vibration recognition (such as a pedometer and a knock), and the like. Other sensors such as a gyroscope, a barometer, a hygrometer, a thermometer, and an infrared sensor may be further configured in the mobile phone 100. Details are not described herein.

The wireless fidelity (Wireless Fidelity, Wi-Fi) apparatus 107 is configured to provide network access conforming to Wi-Fi related standard protocols for the mobile phone 100. The mobile phone 100 may access a Wi-Fi access point by using the Wi-Fi apparatus 107, to help the user send and receive an email, browse a web page, access streaming media, and the like, and provide wireless wideband internet access for the user. In some other embodiments, the Wi-Fi apparatus 107 may also be used as a Wi-Fi wireless access point, and may provide Wi-Fi network access for another device.

The positioning apparatus 108 is configured to provide a geographic location for the mobile phone 100. It may be understood that the positioning apparatus 108 may be specifically a receiver of a positioning system such as a global positioning system (Global Positioning System, GPS), a BeiDou navigation satellite system, or Russian GLONASS. After receiving the geographic location sent by the positioning system, the positioning apparatus 108 sends the information to the processor 101 for processing, or sends the information to the memory 103 for storage. In some other embodiments, the positioning apparatus 108 may alternatively be a receiver of an assisted global positioning system (Assisted Global Positioning System, AGPS). The AGPS system assists the positioning apparatus 108 as an assisted server, to implement ranging and positioning services. In this case, the assisted positioning server communicates with a device such as the positioning apparatus 108 (namely, the GPS receiver) of the mobile phone 100 by using a wireless communications network, to provide positioning assistance. In some other embodiments, the positioning apparatus 108 may be a positioning technology based on a Wi-Fi access point. Because each Wi-Fi hotspot has a globally unique media access control (Media Access Control, MAC) address, if Wi-Fi is enabled, the device may scan and collect broadcast signals nearby Wi-Fi hotspots. Therefore, the MAC address broadcast by the Wi-Fi hotspot may be obtained. The device sends, to a location server by using the wireless communications network, data (for example, the MAC address) that can be used to mark the Wi-Fi hotspot. The location server finds a geographic location of each Wi-Fi hotspot, and combines strength of the broadcast signal of the Wi-Fi to calculate a geographic location of the device and send to the positioning apparatus 108 of the device.

The audio circuit 109, a speaker 113, and a microphone 114 may provide an audio interface between the user and the mobile phone 100. The audio circuit 109 may convert received audio data into an electrical signal and transmit the electrical signal to the speaker 113, and the speaker 113 converts the electrical signal into a sound signal for output. In addition, the microphone 114 converts a collected sound signal into an electrical signal, and the audio circuit 109 receives the electrical signal, converts the electrical signal into audio data, and outputs the audio data to the RF circuit 102, to send the audio data to, for example, another mobile phone, or outputs the audio data to the memory 103 for further processing.

The peripheral interface 110 is configured to provide various interfaces for an external input/output device (for example, a keyboard, a mouse, a display externally connected to the mobile phone 100, an external memory, or a subscriber identity module card). For example, the peripheral interface 110 is connected to a mouse by using a universal serial bus (Universal Serial Bus, USB) interface, and is connected, by using a metal contact on a card slot of the subscriber identification module card, to the subscriber identification module (Subscriber Identification Module, SIM) card provided by a telecom operator. The peripheral interface 110 may be configured to couple the external input/output peripheral device to the processor 101 and the memory 103.

In the embodiments of the present invention, the mobile phone 100 may communicate with another device in a device group by using the peripheral interface 110, for example, may receive, by using the peripheral interface 110, display data sent by another device, and display the display data, and the like. This is not limited in the embodiments of the present invention.

The mobile phone 100 may further include a power supply apparatus 111 (for example, a battery or a power supply management chip) that supplies power to the components. The battery may be logically connected to the processor 101 by using the power supply management chip, so that functions such as charging, discharging, and power consumption management are implemented by using the power supply apparatus 111.

Although not shown in FIG. 1, the mobile phone 100 may further include a camera (a front-facing camera and/or a rear-facing camera), a flash, a micro projection apparatus, a near field communications (Near Field Communications, NFC) apparatus, and the like. Details are not described herein.

The method for creating an album title provided in the embodiments of this application may be executed by an apparatus for creating an album title. The apparatus for creating an album title is a device (for example, the mobile phone 100 shown in FIG. 1) that can be used to manage a picture, a central processing unit (Central Processing Unit, CPU) of the device, a control module that is in the device and that is configured to create an album title, or a client that is on the device and that is configured to manage a picture. In the embodiments of this application, the method for creating an album title is described by using an example in which the device performs the method for creating an album title.

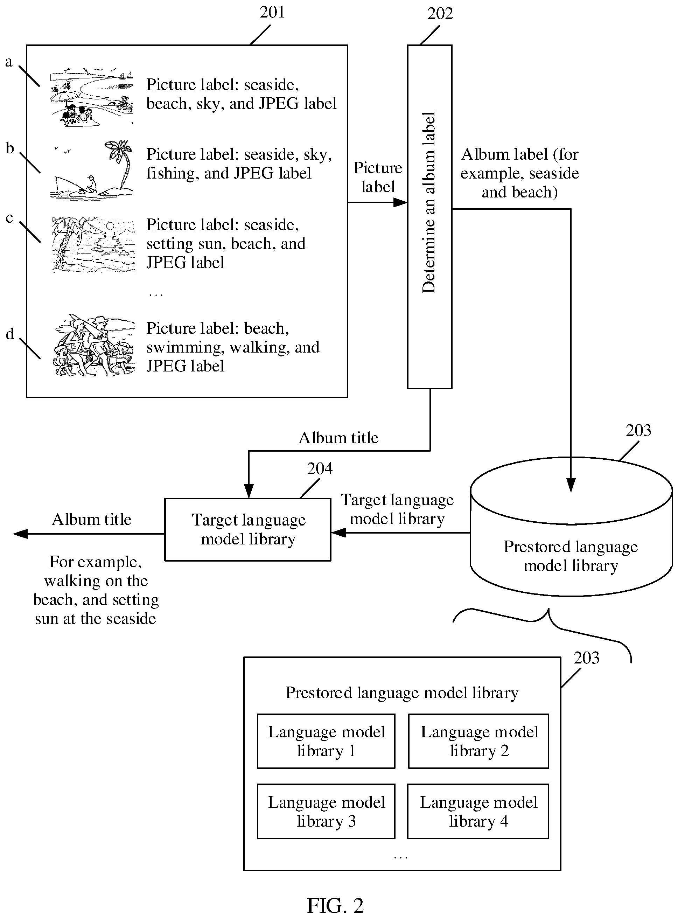

FIG. 2 is a schematic diagram of a system principle framework of a method for creating an album title according to an embodiment of this application. The device may analyze a picture in a first album, to obtain a picture label of each of a plurality of pictures (including a picture a, a picture b, a picture c, and a picture d) shown in 201 in FIG. 2. For example, a picture label of the picture a shown in FIG. 2 may include: seaside, beach, and sky; a picture label of the picture b shown in FIG. 2 may include: seaside, sky, and fishing; a picture label of the picture c shown in FIG. 2 may include: seaside, setting sun, and beach; a picture label of the picture d shown in FIG. 2 may include: beach, swimming, and walking.

Optionally, when determining the picture label of the picture, the device may further refer to information in a joint photographic experts group (Joint Photographic Experts Group, JPEG) format of the picture. For example, as shown in FIG. 2, the picture label of the picture a may further include a JPEG label of the picture a, the picture label of the picture b may further include a JPEG label of the picture b, the picture label of the picture c may further include a JPEG label of the picture c, and the picture label of the picture d may further include a JPEG label of the picture d.

As shown in FIG. 2, the device may then perform 202 shown in FIG. 2 to determine an album label of the first album from the picture labels of all the pictures to be managed. To be specific, the device selects a picture label that can be used to describe content of the picture in the first album from the picture labels of all the pictures to be managed, and determines the selected one or more pictures as the album label of the first album.

Then, the device may determine a target language model library 204 (namely, a first language model library) from a prestored language model library 203 based on the album label of the first album. The prestored language model library 203 includes at least two language model libraries. For example, the prestored language model library 203 shown in FIG. 2 includes a language model library 1, a language model library 2, a language model library 3, and a language model library 4.

Finally, the device may search, based on the label of the first album, the target language model library 204 for primitive word segments that match the album label of the first album, and create an album title of the first album based on the found primitive word segments. For example, as shown in FIG. 2, the device may create album titles "walking on the beach" and "setting sun at the seaside."

The following describes in detail, by using specific embodiments, the method for creating an album title provided in the embodiments of this application.

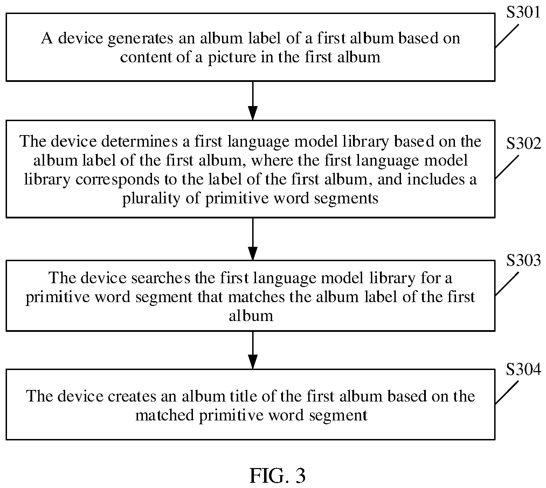

An embodiment of this application provides a method for creating an album title. As shown in FIG. 3, the method for creating an album title includes S301 to S304.

S301: A device generates an album label of a first album based on content of a picture in the first album.

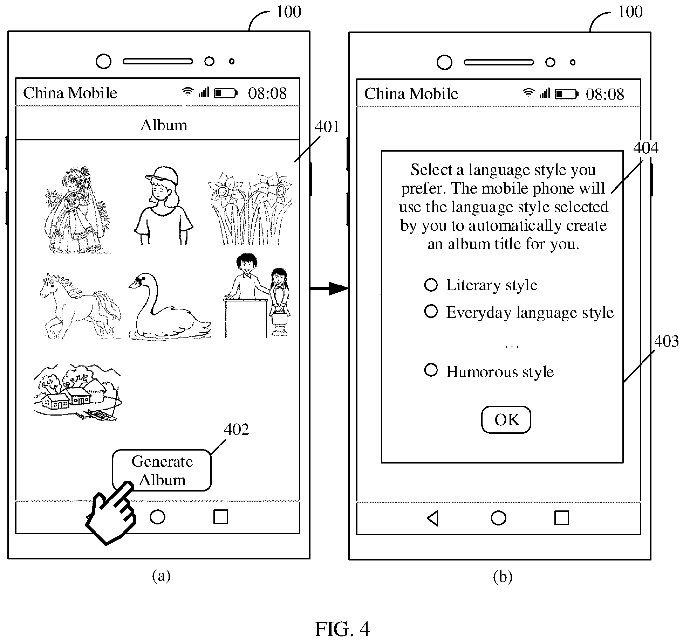

In this embodiment of this application, the device may perform, in response to an operation of a user, S301 and a subsequent method procedure to create an album title. For example, the operation of the user may be a tap operation performed by the user on a function key or a function button that is used to manage a picture and that is on the device. For example, the device is the mobile phone 100. As shown in (a) in FIG. 4, a display screen 401 of an "album" application of the mobile phone 100 includes a function button 402, for example, a "generate an album" button 402, used to control the mobile phone 100 to perform the method for creating an album title provided in this embodiment of this application. After receiving the tap operation performed by the user on the function button 402, the mobile phone 100 may perform S301 and the subsequent method procedure in response to the tap operation of the user.

Alternatively, the device (for example, the mobile phone or a client on the mobile phone) may periodically detect a quantity of newly added pictures on the device. When the quantity of newly added pictures exceeds a preset picture threshold, the device may perform S301 and the subsequent method procedure to create an album title for an album including the newly added picture.

Alternatively, the device (for example, a cloud server) may periodically detect a quantity of newly added pictures in different user accounts. If detecting that a quantity of newly added pictures in one user account exceeds a preset picture threshold, the device may perform S301 and the subsequent method procedure to create an album title for an album including the newly added picture in the user account.

For example, in this embodiment of this application, a method for generating the album label of the first album by the device may include S301a to S301d.

S301a: The device generates the first album, where the first album includes a plurality of pictures.

The first album in this embodiment of this application may be obtained after the device automatically classifies to-be-managed pictures (pictures stored on the device or the cloud server) into different albums based on information such as photographing time and photographing locations of the to-be-managed pictures. As shown in (a) in FIG. 4, after the mobile phone 100 receives the tap operation performed by the user on the function button 402, the mobile phone 100 may automatically classify the pictures into different albums based on the information such as the photographing time and the photographing locations of the pictures stored on the mobile phone 100, to obtain one or more first albums.

Optionally, the first album in this embodiment of this application may alternatively be obtained after the device classifies, in response to a management operation performed by the user on the to-be-managed pictures, the to-be-managed pictures into different albums. A specific method for generating the first album by the device is not limited in this embodiment of this application.

S301b: The device generates, based on each picture in the first album, a picture label corresponding to the picture.

It may be understood that, the picture label of each picture is generated based on content of the corresponding picture. Therefore, the picture label of each picture is used to describe the content of the corresponding picture.

For each picture in the first album, the device may perform the following operations to obtain the picture label of the picture: recognizing image content of a picture to obtain object information included in the picture, and determining the obtained object information as a picture label of the picture. The object information included in the picture may be a person image, a building image (for example, a house or a bridge), a landscape image (for example, an ocean, a beach, a lake, a mountain, or setting sun), and an image of an activity that a person is conducting (such as fishing, swimming, or boating) included in the picture.

S301c: The device collects statistics on a total quantity of obtained picture labels, and a quantity of each type of picture labels in all the obtained picture labels.

For example, it is assumed that the first album includes a picture a, a picture b, a picture c, a picture d, a picture e, and a picture f. The picture a has two picture labels and the two picture labels are seaside and beach. The picture b has two picture labels and the two picture labels are beach and sky. The picture c has two picture labels and the two picture labels are beach and walking. The picture d has two picture labels and the two picture labels are beach and sunbathe. The picture e has two picture labels and the two picture labels are beach and volleyball. The picture f has two picture labels and the two picture labels are sunset and beach. Therefore, the device may obtain through statistics that the total quantity of picture labels is 12 (to be specific, 2 + 2 + 2 + 2 + 2 + 2 = 12). A quantity of picture labels "seaside" is 1, a quantity of picture labels "beach" is 6, a quantity of picture labels "sky" is 1, a quantity of picture labels "walking" is 1, a quantity of picture labels "sunbathe" is 1, a quantity of picture labels "volleyball" is 1, and a quantity of picture labels "sunset" is 1.

S301d: The device calculates a ratio of the quantity of each type of picture labels to the total quantity of picture labels, and determines a picture label whose ratio is greater than a second preset threshold as the album label of the first album.

For example, with reference to the foregoing example, if the second preset threshold is 45%, the device may obtain, through calculation, a ratio of the quantity of picture labels "seaside" to the total quantity of picture labels is $(1 \div 12) \times 100\% = 8.33\%$, a ratio of the quantity of picture labels "beach" to the total quantity of picture labels is $(6 \div 12) \times 100\% = 50\%$, a ratio of the quantity of picture labels "sky" to the total quantity of picture labels is $(1 \div 12) \times 100\% = 8.33\%$, a ratio of the quantity of picture labels "walking" to the total quantity of picture labels is $(1 \div 12) \times 100\% = 8.33\%$, a ratio of the quantity of picture labels "sunbathe" to the total quantity of picture labels is $(1 \div 12) \times 100\% = 8.33\%$, the quantity of picture labels "volleyball" is 1, and a ratio of the quantity of picture labels "sunset" to the total quantity of picture labels is $(1 \div 12) \times 100\% = 8.33\%$. The ratio 50% of the quantity of picture labels "beach" to the total quantity of picture labels is greater than 45% (namely, the second preset threshold). Therefore, the device may determine the picture label "beach" as the album label of the first album.

It may be understood that, in this embodiment of this application, the album label of the first album may include the foregoing one or more pictures labels. For example, the album label shown in FIG. 2 includes two picture labels: seaside and beach.

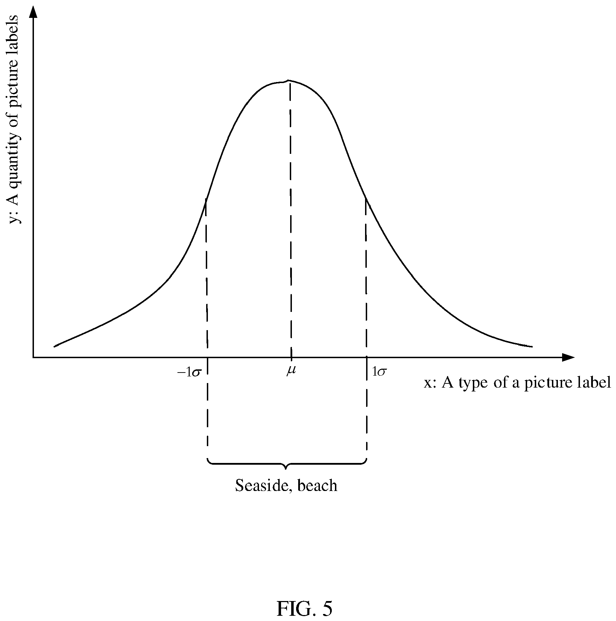

Optionally, after obtaining the quantity of each type of picture labels in all the obtained picture labels, the device may further obtain a normal distribution curve diagram of the quantity of picture labels shown in FIG. 5. An x axis of the normal distribution curve diagram shown in FIG. 5 is the type of the picture label, a y axis is the quantity of picture labels, $\mu$ is an expected value of normal distribution, and $\sigma$ is a standard deviation of normal distribution. Then, the device may determine a picture label located at a central position of the normal distribution curve diagram shown in FIG. 5 as the album label of the first album. For example, the picture labels "seaside" and "beach" are located at the central position of the normal distribution curve diagram shown in FIG. 5, and therefore the device may determine "seaside" and "beach" as the album label of the first album.

S302: The device determines a first language model library based on the album label of the first album, where the first language model library corresponds to the label of the first album, and includes a plurality of primitive word segments.

In this embodiment of this application, a plurality of language model libraries may be prestored, and a plurality of album labels may be prestored for each language model library, so that the device may determine the first language model library from the prestored language model library based on the album label of the first album.

It may be understood that in this embodiment of this application, the plurality of album labels prestored for each language model library may be stored on the device. Alternatively, the plurality of album labels prestored for each language model library may be stored on a server configured to manage a correspondence between an album label and a language model library. The device may send, to the server, a language model library query message that carries the album label of the first album, to request the server to determine, from the prestored language model library according to the correspondence between a language model library and an album label that is stored on the server, a language model library corresponding to the first album. Then, the device may receive a response message sent by the server, where the response message carries indication information used to indicate the language model library corresponding to the first album. The device may determine, based on the indication information, the language model library (namely, the first language model library) corresponding to the first album.

For example, refer to table 1. Table 1 shows an example correspondence table between language model libraries and album labels according to an embodiment of this application. The device or the server may prestore the plurality of album labels for each language model library by using "the correspondence table between language model libraries and album labels" shown in table 1.

**Table 1**

| Correspondence table between language model libraries and album labels | | | | |
|---|---|---|---|---|
| Prestored language model library | Album label | | | |
| Language model library 1 | Album label a | Album label b | ... | Album label c |
| Language model library 2 | Album label d | Album label e | ... | Album label f |
| Language model library 3 | Album label g | Album label h | ... | Album label k |
| Language model library 4 | Album label a | Album label i | ... | Album label f |

As shown in table 1, the language model library 1 may correspond to a plurality of album labels such as the album label a, the album label b, and the album label c. The language model library 2 may correspond to a plurality of album labels such as the album label d, the album label e, and the album label f. The language model library 3 may correspond to a plurality of album labels such as the album label g, the album label h, and the album label k. The language model library 4 may correspond to a plurality of album labels such as the album label a, the album label i, and the album label f.

It should be noted that, in this embodiment of this application, a same album label may correspond to one or more language model libraries. For example, the album label b shown in table 1 corresponds to the language model library 1, and the album label a corresponds to the language model library 1 and the language model library 4. When the album label corresponds to more language model libraries, the device may perform S303 and S304 for each language model library corresponding to the album label.

Optionally, a plurality of scenarios may be preset in a possible implementation of this embodiment of this application. A language model library is stored for each of the preset plurality of scenarios. Each language model library includes primitive word segments used to describe a picture corresponding to a scenario.

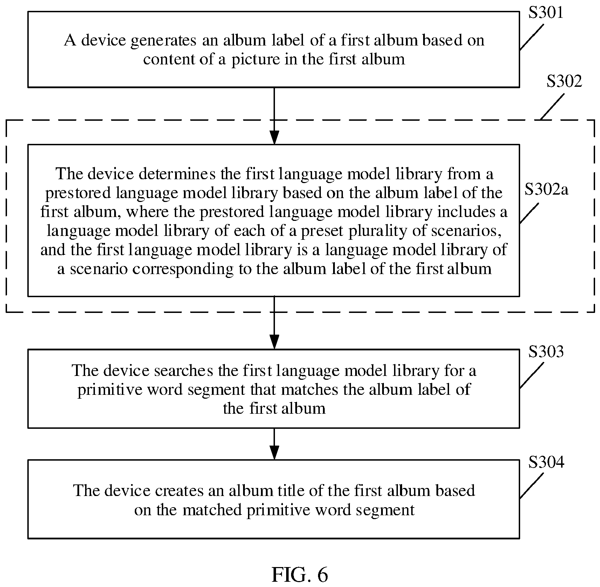

In this implementation, that the first language model library corresponds to the label of the first album may specifically be: The first language model library is a language model library of a scenario corresponding to the album label of the first album. As shown in FIG. 6, S302 shown in FIG. 3 may include S302a.

S302a: The device determines the first language model library from a prestored language model library based on the album label of the first album, where the prestored language model library includes a language model library of each of a preset plurality of scenarios, and the first language model library is a language model library of a scenario corresponding to the album label of the first album.

For example, the preset plurality of scenarios may include a travel scenario, a food scenario, a sports scenario, a shopping scenario, an entertainment scenario, a parent-child activity scenario, and the like. Certainly, the scenarios in this embodiment of this application include but are not limited to the foregoing scenario examples, and other scenarios are not described herein.

It is assumed that the preset plurality of scenarios include a scenario 1, a scenario 2, a scenario 3, and a scenario 4. With reference to table 1, table 2 shows an example correspondence table between a scenario and an album label according to this embodiment of this application. The device or the server shown in table 2 may prestore the plurality of album labels for each scenario by using "the correspondence table between scenarios and album labels" shown in table 1.

**Table 2**

| Correspondence table between language model libraries and album labels | | | | | |
|---|---|---|---|---|---|
| Prestored language model library | Preset plurality of scenarios | Album label | | | |
| Language model library 1 | Scenario 1 | Album label a | Album label b | ... | Album label c |
| Language model library 2 | Scenario 2 | Album label d | Album label e | ... | Album label f |
| Language model library 3 | Scenario 3 | Album label g | Album label h | ... | Album label k |
| Language model library 4 | Scenario 4 | Album label a | Album label i | ... | Album label f |

As shown in table 2, the scenario 1 may correspond to a plurality of album labels such as the album label a, the album label b, and the album label c. The scenario 2 may correspond to a plurality of album labels such as the album label d, the album label e, and the album label f. The scenario 3 may correspond to a plurality of album labels such as the album label g, the album label h, and the album label k. The scenario 4 may correspond to a plurality of album labels such as the album label a, the album label i, and the album label f. In addition, the language model library 1 is a language model library of the scenario 1, the language model library 2 is a language model library of the scenario 2, the language model library 3 is a language model library of the scenario 3, and the language model library 4 is a language model library of the scenario 4.

For example, it is assumed that the scenario 1 is a tourism scenario, and the album labels such as the album label a, the album label b, and the album label c in the scenario 1 may include a name of a scenic spot (for example, a name of human historical sites such as Tian An Men Square, Palace Museum, Terra-Cotta Warriors, and Great Wall, and a name of scenic spots such as West Lake in Hangzhou, mount Huangshan, Sanya, and Jiuzhaigou Valley), a name of natural landscape (for example, seaside, beach, grassland, lake, and sunset), and a phrase used to describe the scenic spot (for example, picturesque scenery, beautiful view, and long history).

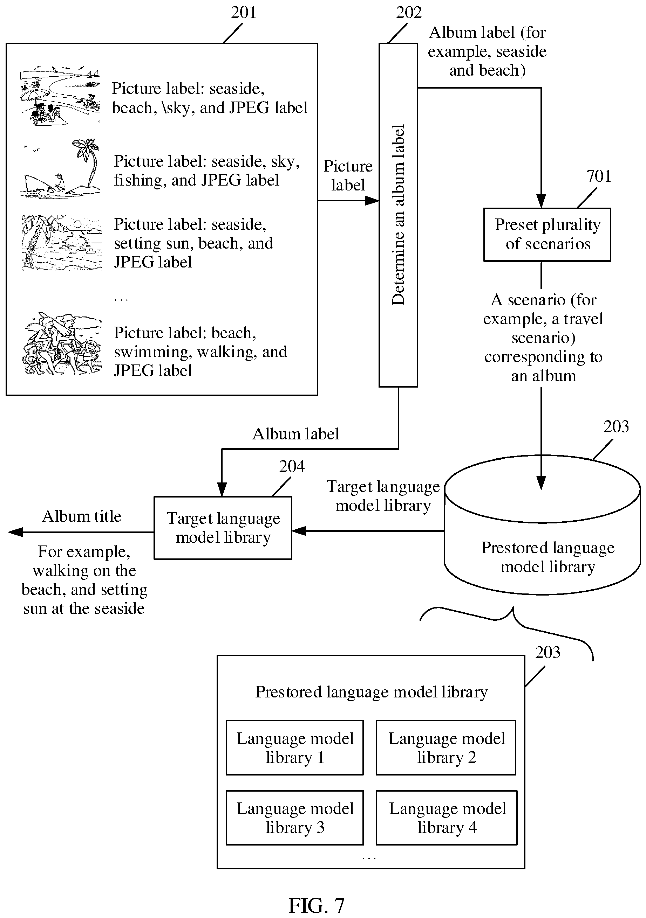

With reference to FIG. 2, as shown in FIG. 7, the device may determine, from the preset plurality of scenarios 701, the scenario (for example, a travel scenario) corresponding to the album label of the first album, and determine the language model library of the scenario. As shown in FIG. 7, it is assumed that the album label of the first album includes "seaside" and "beach", and the device may determine that the scenario corresponding to the album label of the first album is a "travel scenario."

S303: The device searches the first language model library for a primitive word segment that matches the album label of the first album.

Each language model library (including the first language model library) includes a plurality of primitive word segments. Therefore, after determining the first language model library, the device may search the plurality of primitive word segments in the first language model library for a primitive word segment that matches the album label of the first album.

It may be understood that, in this embodiment of this application, that the album label matches a primitive word segment may include: The album label is the same as the primitive word segment, or the album label and the primitive word segment are a synonym of each other.

For example, the device may search the first language model library for the primitive word segment same as the album label of the first album. If the primitive word segment that is the same as the album label of the first album is found, the found primitive word segment is one that matches the album label of the first album. If the primitive word segment that is the same as the album label of the first album is not found, the device searches for a synonym primitive word segment (namely, a primitive word segment that is a synonym of the album label of the first album) of the album label of the first album. In this case, the found synonym primitive word segment is a primitive word segment that matches the album label of the first album.

For example, it is assumed that the first language model library includes primitive word segments such as "sunset", "going down in the west", and "beautiful." When the album label of the first album is "sunset", the device may find a first primitive word segment "sunset" from the first language model library. When the album label of the first album is "setting sun", the first language model library does not include a primitive word segment "setting sun", the device may search the first language model library for a synonym primitive word segment of the album label "setting sun". For example, "sunset", "glow of the setting sun", and the like. In this way, the device may find the synonym primitive word segment "sunset" (namely, the first primitive word segment) of "setting sun" from the first language model library.

S304: The device creates an album title of the first album based on the matched primitive word segment.

According to the method for creating an album title provided in this embodiment of this application, the device may generate the album label of the first album based on the content of the picture in the first album, determine, based on the label of the first album, the first language model library corresponding to the album label of the first album, search the first language model library for the primitive word segment that matches the album label of the first album, and finally creates the album title of the first album based on the matched primitive word segment.

The album label of the first album is generated based on the content of the picture in the first album. The album label of the first album may be used to describe the content of the picture in the first album. Therefore, the device creates the album title of the first album based on the primitive word segments in the first language model library corresponding to the album label of the first album, so that the created album title can better match the content of the first album.

Optionally, the first language model library further includes a conditional probability of one primitive word segment to another primitive word segment in the first language model library

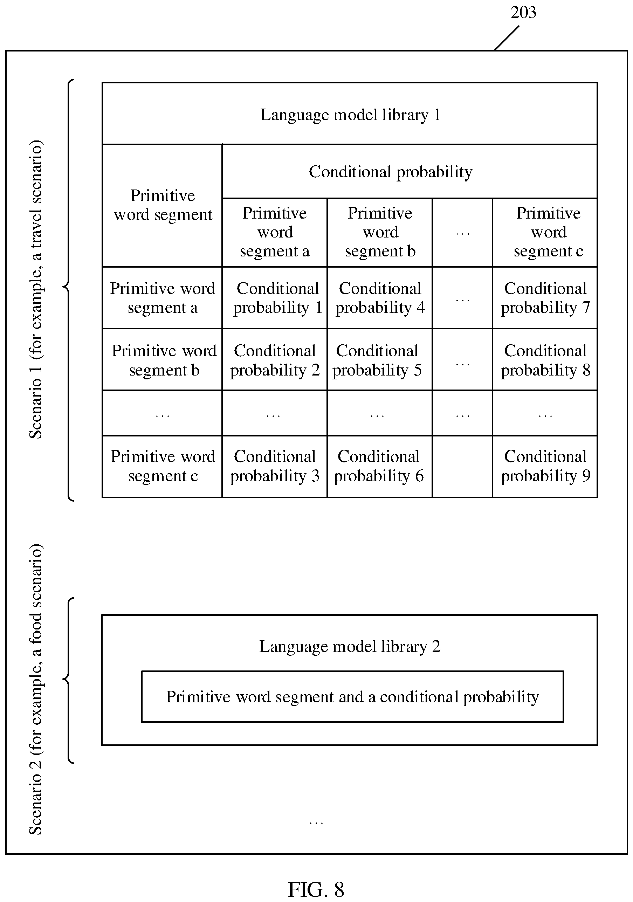

For example, as shown in FIG. 8, a language model library database 203 includes the language model library 1 of the scenario 1 (for example, a travel scenario) and the language model library 2 of the scenario 2 (for example, a food scenario). The language model library 1 shown in FIG. 8 is used as an example. The language model library 1 includes a primitive word segment a, a primitive word segment b, a primitive word segment c, and the like; a conditional probability 1 of the primitive word segment a to the primitive word segment a, a conditional probability 2 of the primitive word segment a to the primitive word segment b, a conditional probability 3 of the primitive word segment a to the primitive word segment c, and the like; a conditional probability 4 of the primitive word segment b to the primitive word segment a, a conditional probability 5 of the primitive word segment b to the primitive word segment b, a conditional probability 6 of the primitive word segment b to the primitive word segment c, and the like; a conditional probability 7 of the primitive word segment c to the primitive word segment a, a conditional probability 8 of the primitive word segment c to the primitive word segment b, a conditional probability 9 of the primitive word segment c to the primitive word segment c, and the like.

The conditional probability of one primitive word segment to another primitive word segment is: in a phrase included in the first language model library, when the another primitive word segment occurs in the phrase, a probability that the one primitive word segment occurs after the another primitive word segment in the phrase.

For example, as shown in FIG. 8, the conditional probability 4 of the primitive word segment b to the primitive word segment a is: when the primitive word segment a occurs in the phrases in the language model library 1, a probability that the primitive word segment b occurs after the primitive word segment a in the phrases. The conditional probability 2 of the primitive word segment a to the primitive word segment b is: when the primitive word segment b occurs in the phrases in the language model library 1, a probability that the primitive word segment a occurs after the primitive word segment b in the phrases. The conditional probability 8 of the primitive word segment c to the primitive word segment b is: when the primitive word segment b occurs in the phrases in the language model library 1, a probability that the primitive word segment c occurs after the primitive word segment b in the phrases.

Refer to table 3. Table 3 shows an example table of a language model library according to an embodiment of this application. The language model library (for example, a language model library in a travel scenario) shown in FIG. 3 includes primitive word segment such as "sun", "setting in the west", "is", "beautiful", and "nice."

Table 3

| Example table of a language model library | | | | | | |
|---|---|---|---|---|---|---|
| | Conditional probability | | | | | |
| Primitive word segment | Sun | Setting in the west | Is | ... | Beautiful | Nice |
| Sun | 4% | 79% | 1% | ... | 2% | 8% |
| Setting in the west | 3% | 1% | 86% | ... | 2% | 3% |
| Is | 2% | 1% | 1% | ... | 48% | 47% |

(continued)

| Example table of a language model library | | | | | | |
|---|---|---|---|---|---|---|
| | Conditional probability | | | | | |
| Primitive word segment | Sun | Setting in the west | Is | ... | Beautiful | Nice |
| ... | ... | ... | ... | ... | ... | ... |
| Nice | 6% | 2% | 32% | ... | 1% | 2% |

For example, in the language model library shown in table 3, when the primitive word segment "sun" occurs in a phrase in the language model library shown in table 3, a probability that the primitive word segment "sun" occurs after the primitive word segment "sun" in the phrase is 4%. In other words, the probability that "sun sun" occurs in the created album title is 4%. When the primitive word segment "sun" occurs in the phrase in the language model library shown in table 3, a probability that the primitive word segment "setting in the west" occurs after the primitive word segment "sun" in the phrase is 79%.

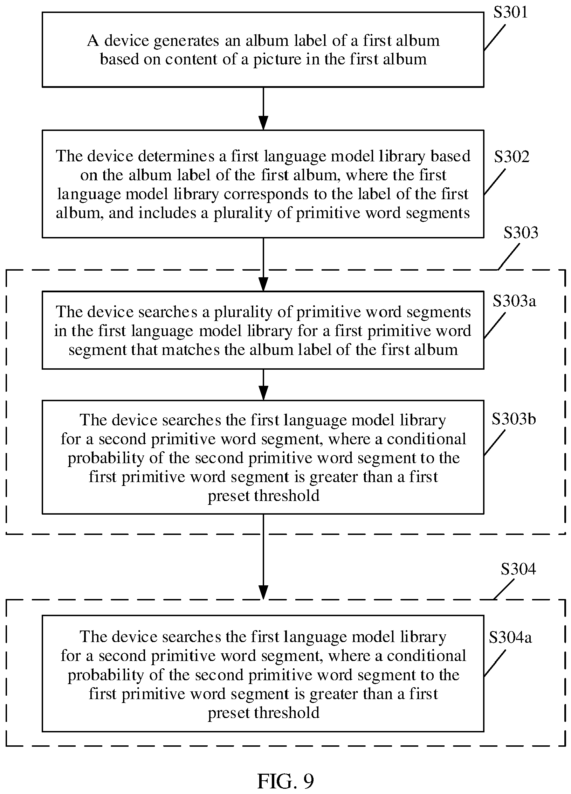

Correspondingly, the device may create the album title of the first album based on a conditional probability of other primitive word segments to the first primitive word in the first language model library. Specifically, S303 may include S303a and S303b, and S304 may include S304a. As shown in FIG. 9, S303 shown in FIG. 3 may include S303a and S303b, and S304 shown in FIG. 3 may include S304a.

S303a: The device searches a plurality of primitive word segments in the first language model library for a first primitive word segment that matches the album label of the first album.

That the album label matches a primitive word segment may include: The album label is same as the primitive word segment, or the album label and the primitive word segment are a synonym of each other. To be specific, the device may search the plurality of primitive word segments in the first language model library for the first primitive word segment that is the same as the album label of the first album, or the first primitive word segment that is a synonym of the album label of the first album.

S303b: The device searches the first language model library for a second primitive word segment, where a conditional probability of the second primitive word segment to the first primitive word segment is greater than a first preset threshold.

S304a: The device uses a phrase including the first primitive word segment and the second primitive word segment as the album title of the first album.

It is assumed that the first primitive word segment is "sun" shown in table 3, and the first preset threshold is 45%. As shown in table 3, when "sun" occurs in the phrase in the language model library shown in table 3, the probability that "sun" occurs after "sun" in the phrase is 4%, the probability that "setting in the west" occurs after "sun" in the phrase is 79%, a probability that "is" occurs after "sun" in the phrase is 1%, a probability that "beautiful" occurs after "sun" in the phrase is 2%, and a probability that "nice" occurs after "sun" in the phrase is 8%.

When "sun" occurs in the phrase in the language model library shown in table 3, the probability 79% that "setting in the west" occurs after "sun" in the phrase is higher than the first preset threshold (45%). Therefore, the device may determine that the second primitive word segment includes the primitive word segment "setting in the west" corresponding to the conditional probability 79%. In this way, the device may create an album title "sun setting in the west."

The language model library in this embodiment of this application may be a unary model library, a binary model library, a trigram model library, or the like. When the language model library is a unary model library, after obtaining the first primitive word segment (for example, "sun") that occurs and a primitive word segment (for example, "setting in the west") having a highest probability, the device may create the album title (for example, "sun setting in the west") including the first primitive word segment (for example, "sun") and the primitive word segment (for example, "setting in the west") having the highest probability.

When the language model library is a binary model, after determining that the second primitive word segment includes the primitive word segment "setting in the west", the device may further determine, from the plurality of primitive word segments shown in table 3, that when "setting in the west" occurs in the phrase in the language model library shown in table 3, a primitive word segment whose probability of occurring after "setting in the west" in the phrase is higher than the first preset threshold. For example, when "setting in the west" occurs in the phrase in the language model library shown in table 3, a probability 86% that "is" occurs after "setting in the west" in the phrase is higher than the first preset threshold (for example, 45%). The device may create an album title that "sun setting in the west is".

Further, the device may further perform semantic analysis on the album title created by the device, to analyze whether semantics of the created album title is complete. Semantics of the album title "sun setting in the west is" is incomplete. Therefore, the device may continue to determine, from the plurality of primitive word segments shown in table 3, that when "is" occurs in the phrase in the language model library shown in table 3, a primitive word segment whose probability of occurring after "is" in the phrase is higher than the first preset threshold. For example, when "is" occurs in the phrase in the language model library shown in table 3, probabilities 48% and 47% that "beautiful" and "nice" occur after "is" in the phrase are higher than the first preset threshold (for example, 45%). The device may create album titles that "sun setting in the west is beautiful" and "sun setting in the west is nice."

In conclusion, the device may create the following album titles: "sun setting in the west", "sun setting in the west is beautiful", and "sun setting in the west is nice."

According to the method for creating an album title provided in this embodiment of this application, the first language model library includes not only the plurality of primitive word segments, but also the conditional probability of each primitive word segment to another primitive word segment. The conditional probability of other primitive word segments to the first primitive word segment in the first language model library is used as an example. The conditional probability of other primitive word segments to the first primitive word segment is: in the phrases included in the first language model library, when the first primitive word segment occurs in the phrases, a probability that the other primitive word segments occur after the first primitive word segment in the phrases. In other words, the conditional probability of other primitive word segments to the first primitive word segment may reflect the probability that the other primitive word segments occurs after the first primitive word segment in the first language model library and forms a phrase with the first primitive word segment. In this way, after determining the first primitive word that matches the album label of the first album, the device may determine the second primitive word whose conditional probability to the first primitive word segment is greater than the first preset threshold, and use the phrase including the first primitive word and the second primitive word as the album title of the first album.

Further, if the device performs S304 to create the album title for the first album. After S304, the method in this embodiment of this application may further include S901.

S901: When the device creates the album title for the first album, the device displays the obtained album title in the first album.

Further, if the device performs S304 to create at least two album titles for the first album, after creating the at least two album titles, the device may randomly select one of the at least two album titles and display the selected album title in the first album. Specifically, after S304, the method in this embodiment of this application may further include S902.

S902: When the device creates at least two album titles for the first album, the device randomly selects one of the at least two album titles and displays the selected album title in the first album.

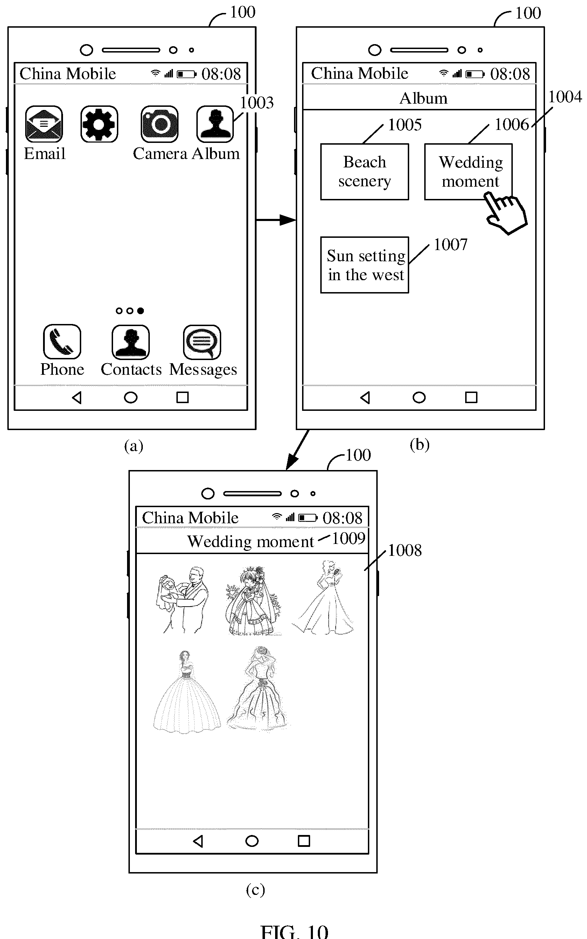

For example, the device is the mobile phone 100. After creating the album title for the first album, if the mobile phone 100 receives a tap operation performed by the user on an icon 1003 of an "album" application shown in (a) in FIG. 10, the mobile phone 100 may display, in response to the tap operation performed by the user on the icon 1003 of the "album" application, an album list screen 1004 shown in (b) in FIG. 10. The album list screen 1004 includes a plurality of albums generated by the mobile phone 100, for example, an album 1005, an album 1006, and an album 1007. In addition, an album title of each album may be displayed on an icon of the album. For example, as shown in (b) in FIG. 10, an album title of the album 1005 is "beach scenery", an album title of the album 1006 is "wedding moment", and an album title of the album 1007 is "sun setting in the west."

Further, the mobile phone 100 may display, in response to a tap operation performed by the user on an icon of any album on the album list screen 1004, a picture list screen corresponding to the album. For example, after the user taps an icon of the album 1006 shown in (b) in FIG. 10, the mobile phone 100 may display, in response to a tap operation performed by the user on the icon of the album 1006, a picture list screen 1008 of the album 1006 shown in (c) in FIG. 10. The picture list screen 1008 includes the album title "wedding moment" 1009 of the album 1006.

It may be understood that, the created album title in this embodiment of this application can better match content of a picture in an album. Therefore, displaying the album title created for the first album in the first album can not only identify the first album, but also improve user experience when the user views the first album.

Optionally, to use an album title preferred by the user, if the device performs S304 to create the at least two album titles for the first album, the device may further display the at least two album titles for the user to select, and determine an album title selected by the user as the album title of the first album. Specifically, after S304, the method in this embodiment of this application may further include S 110 1.

S1101: The device displays at least two album titles created for the first album, and displays, in response to a selection operation for any one of the at least two album titles, an album title selected by a user in the first album.

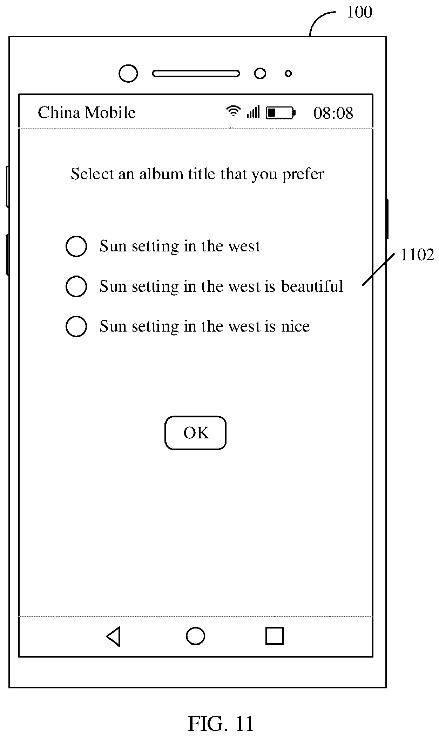

For example, it is assumed that the at least two album titles include the album title "sun setting in the west", "sun setting in the west is beautiful", and "sun setting in the west is nice" that are created in the foregoing example. For example, the device is the mobile phone 100. After creating the at least two album titles, the mobile phone 100 may display a title selection screen 1102 shown in FIG. 11. The title selection screen 1102 includes prompt information (for example, "Select an album title that you prefer"), a title option "sun setting in the west", a title option "sun setting in the west is beautiful", a title option "sun setting in the west is nice", and an "OK" button. The mobile phone 100 may determine, in response to a selection operation performed by the user on the title option on the title selection screen 1102 and a tap operation performed by the user on the "OK" button, an album title selected by the user.

For a specific method for displaying, by the device in the first album, the album title selected by the user, refer to related descriptions of S901 and S902 in the foregoing embodiment of this application. Details are not described herein again.

According to this embodiment of this application, after creating the plurality of album titles for the first album, the device may display the plurality of album titles on the device for the user to select, and use the album title selected by the user as the album title of the first album. In this way, the album title preferred by the user is used.

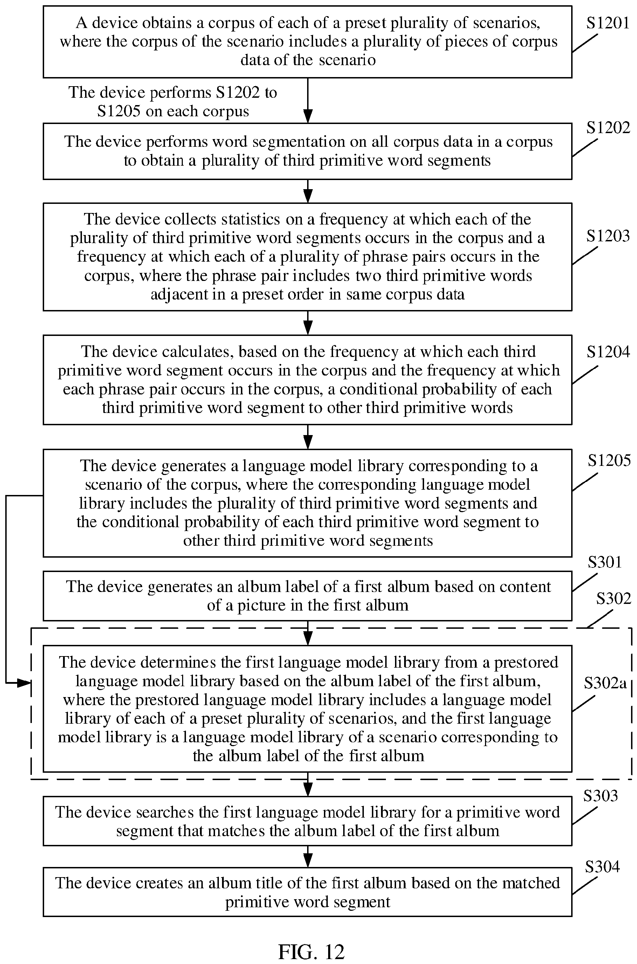

In this embodiment of this application, the device may separately collect corpus data for each of the preset plurality of scenarios to obtain a plurality of corpora. In other words, each scenario may include a corpus. Then, the device may collect statistics on a plurality of primitive word segments (to be specific, perform word segmentation on corpus data in the corpus to obtain the plurality of primitive word segments) in each corpus, to obtain a corresponding language model library. Specifically, before S302, the method in this embodiment of this application may further include S 1201 to S 1205. For example, as shown in FIG. 12, before S302 shown in FIG. 6, the method in this embodiment of this application may further include S1201 to S1205.

S 1201: The device obtains a corpus of each of a preset plurality of scenarios, where the corpus of the scenario includes a plurality of pieces of corpus data of the scenario.

The corpus data in this embodiment of this application may include an album title used when people name an album. For example, "backpacker traveling around the world", "sun setting in the west is nice", "delicious food", "baby's first birthday photo album", "cat's moments", and "one-day Palace Museum tour." The device may obtain, from the internet by using some crawler tools, an album title uploaded by the user. The crawler tool is a program or a script that automatically captures internet information according to a specific rule.

The corpus data in this embodiment of this application may further include corpus data obtained by the device from an open-source corpus (for example, a Sogou corpus). The device may extract corpus data corresponding to each scenario from the open-source corpus, and store the corpus data in a corresponding corpus.

The corpus data in this embodiment of this application may further include corpus data obtained by the device from literature books and periodicals such as Chinese ancient poems, literary works in and outside China, famous journals in and outside China, and internet literature works. The device may extract, from the literature books and periodicals, corpus data corresponding to each language style of each scenario, and store the corpus data in a corresponding corpus.

It may be understood that, a source of the corpus data in this embodiment of this application includes but is not limited to a source described above. The source of the corpus data collected by the device is not limited in this embodiment of this application.

After S1201, the device may perform S1202 to S1205 on each corpus to analyze corpus data in each corpus and obtain a plurality of language model libraries.

S1202: The device performs word segmentation on all corpus data in a corpus to obtain a plurality of third primitive word segments.

The device may invoke a preset algorithm to perform word segmentation on the corpus data to obtain the plurality of primitive word segments. For example, it is assumed that the corpus includes corpus data "backpacker traveling around the world." The device may perform word segmentation on the corpus data and extract word segments "backpacker", "traveling", and "around the world." It is assumed that the corpus includes corpus data "sun setting in the west is beautiful." The device may perform word segmentation on the corpus data and extract word segments "sun", "setting in the west", "is" and "beautiful."

S1203: The device collects statistics on a frequency at which each of the plurality of third primitive word segments occurs in the corpus and a frequency at which each of a plurality of phrase pairs occurs in the corpus, where the phrase pair includes two third primitive words adjacent in a preset order in same corpus data.

For example, it is assumed that a corpus (a corpus a) includes corpus data "sea scenery", "sunset on the sea", "ocean at sunset", "sun setting in the west", and "sun setting in the west is beautiful." The device performs word segmentation on the corpus data in the corpus a to obtain primitive word segments "sea", "scenery", "sunset", "at", "is", "ocean", "setting in the west", and "beautiful."

In addition, the device may obtain the following through statistics: a quantity of times of the primitive word segment "sea" occurring in the corpus a is 2, a quantity of times of the primitive word segment "scenery" occurring in the corpus a is 1, a quantity of times of the primitive word segment "sun" occurring in the corpus a is 4, a quantity of times of the primitive word segment "at" occurring in the corpus a is 1, a quantity of times of the primitive word segment "is" occurring in the corpus a is 3, a quantity of times of the primitive word segment "ocean" occurring in the corpus a is 1, a quantity of times of the primitive word segment "setting in the west" in the corpus a is 2, and a quantity of times of the primitive word segment "beautiful" occurring in the corpus a is 1. As shown in table 4, table 4 shows an example table of a quantity of occurrence times of the primitive word segments according to an embodiment of this application.

**Table 4**

| Quantity of occurrence times of primitive word segments | | | | | | | |
|---|---|---|---|---|---|---|---|
| Primitive word segment | Sea | Scenery | Sun | At | Is | Ocean | Setting in the west | Beautiful |
| Quantity of occurrence times | 2 | 1 | 4 | 1 | 3 | 1 | 2 | 1 |

Phrase pairs in the corpus a may include a phrase pair "sea scenery" (marked as a phrase pair A) including "sea" and "scenery" in the corpus data "sea scenery"; a phrase pair "on the sea" (marked as a phrase pair B) and a phrase pair "sunset" (marked as a phrase pair C) including "the sea", "on", and "sunset" in the corpus data "sunset on the sea"; a phrase pair "sunset" (marked as a phrase pair D), "at" (marked as a phrase pair E), and "ocean" (marked as a phrase pair F) including "sunset", "at", and "ocean" in the corpus data" ocean at sunset"; a phrase pair "sun setting in the west" (marked as a phrase pair G) including "sun" and "setting in the west" in the corpus data "sun setting in the west"; the phrase pair "sun setting in the west" (marked as the phrase pair G), a phrase pair "setting in the west is" (marked as a phrase pair H), and a phrase pair "beautiful" (marked as a phrase pair I) including "sun", "setting in the west", "is", and "beautiful" in the corpus data "sun setting in the west is beautiful."

A quantity of times of the phrase pair "sea scenery" (namely, the phrase pair A) occurring in the corpus a is 1; a quantity of times of the phrase pair "on the sea" (the phrase pair B) occurring in the corpus a is 1; a quantity of times of the phrase pair "sunset" is (the phrase pair C) occurring in the corpus a is 1; a quantity of times of the phrase pair "sunset" (the phrase pair D) occurring in the corpus a is 1; a quantity of times of the phrase pair "at" (the phrase pair E) occurring in the corpus a is 1; a quantity of times of the phrase pair "ocean" (the phrase pair F) occurring in the corpus a is 1; a quantity of times of the phrase pair "sun setting in the west" (the phrase pair G) occurring in the corpus a is 2; a quantity of times of the phrase pair "setting in the west is" (the phrase pair H) occurring in the corpus a is 1; a quantity of times of the phrase pair" beautiful" (the phrase pair I) occurring in the corpus a is 1. As shown in table 5, table 5 shows an example table of a quantity of occurrence times of the phrase pairs according to an embodiment of this application.

**Table 5**

| Quantity of occurrence times of phrase pairs | | | | | | | |
|---|---|---|---|---|---|---|---|
| Quantity of occurrence times | Sea | Scenery | Sunset | At | Is | Ocean | Setting in the west | Beautiful |
| Sea | 0 (J) | 1 (A) | 0 | 0 | 1 (B) | 0 | 0 | 0 |
| Scenery | 0 | 0 | 0 | 0 | 0 | 0 | 0 | 0 |
| Sunset | 0 | 0 | 0 | 1 (D) | 0 | 0 | 2 (G) | 0 |
| At | 0 | 0 | 0 | 0 | 1 (E) | 0 | 0 | 0 |
| Is | 0 | 0 | 1 (C) | 0 | 0 | 1 (F) | 0 | 1 (I) |
| Ocean | 0 | 0 | 0 | 0 | 0 | 0 | 0 | 0 |
| Setting in the west | 0 | 0 | 0 | 0 | 1 (H) | 0 | 0 | 0 |
| Beautiful | 0 | 0 | 0 | 0 | 0 | 0 | 0 | 0 |

If no phrase pair occurs in the corpus a, a quantity of times of the phrase pair occurring in the corpus a is 0. For example, as shown in table 5, a quantity of times of a phrase pair "sea sea" (marked as a phrase pair J) in the corpus a is 0.

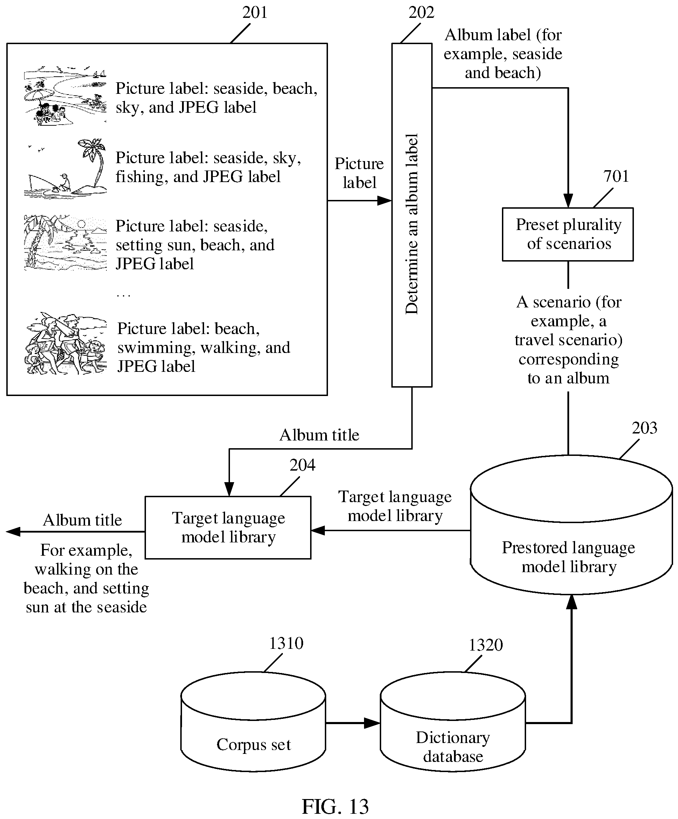

For example, with reference to FIG. 7, the plurality of corpora is included in a corpus set 1310 as shown in FIG. 13. In addition, the device may store, in a dictionary, the plurality of primitive word segments that is obtained after the device performs word segmentation on corpus data in each corpus in the corpus set 1310, the quantity of times of each primitive word segment occurring in the corresponding corpus, and the quantity of times of each of the plurality of phrase pairs occurring in the corpus. For example, based on the foregoing example, the device may store, in a dictionary a, the plurality of primitive word segments that is obtained after the device performs word segmentation on the corpus data in the corpus a, the quantity of times of each primitive word segment occurring in the corpus a, and the quantity of times of each of the plurality of phrase pairs occurring in the corpus a. For example, the quantity of occurrence times of primitive word segments shown in table 4 and the quantity of occurrence times of phrase pairs shown in table 5 may be stored in the dictionary a.

In other words, each of the plurality of corpora corresponds to a dictionary. These dictionaries are stored in a dictionary database 1320 shown in FIG. 13. The device may perform the following operations for each dictionary in the dictionary database 1320: performing word segmentation on data stored in the dictionary; calculating a plurality of conditional probabilities of each primitive word segment in the dictionary; and generating a language model library that stores the primitive word segment and the conditional probabilities of the primitive word segment. The device may collect statistics on data stored in a plurality of dictionaries in the word segment dictionary database 1320, to obtain the prestored language model library 203 shown in FIG. 13.

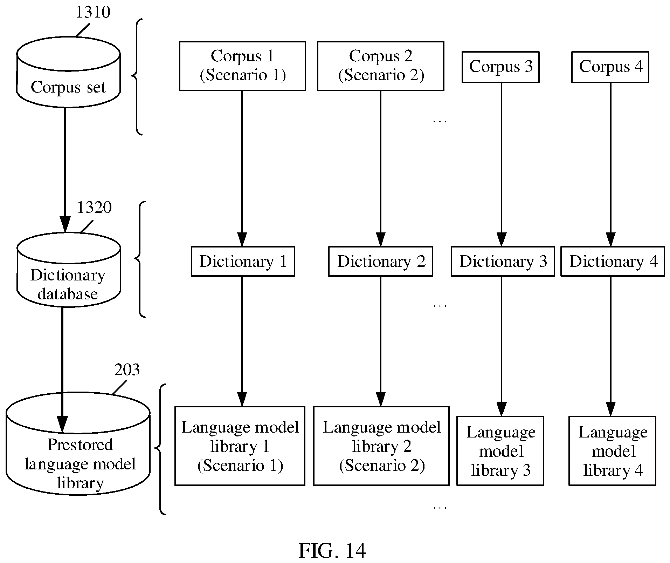

It may be understood that a corpus in the corpus set 1310 shown in FIG. 13 is in a one-to-one correspondence with a dictionary in the dictionary database 1320, and the dictionary in the dictionary database 1320 is in a one-to-one correspondence with a language model library in the prestored language model library 203. For example, as shown in FIG. 14, a corpus 1 corresponds to a dictionary 1, and the dictionary 1 corresponds to the language model library 1; a corpus 2 corresponds to a dictionary 2, and the dictionary 2 corresponds to the language model library 2; a corpus 3 corresponds to a dictionary 3, and the dictionary 3 corresponds to the language model library 3; a corpus 4 corresponds to a dictionary 4, and the dictionary 4 corresponds to the language model library 4.

In this embodiment of this application, the corpus 1, the dictionary 1, and the language model library 1 are used as an example to describe a relationship between the corpus, the dictionary, and the language model library.

The corpus 1 includes corpus data of the scenario 1. The corpus data in the corpus 1 is a frequently used phrase (namely, an album title) when the device collects statistics on a picture used to describe the scenario 1. The dictionary 1 includes a plurality of primitive word segments that is obtained after the device performs word segmentation on the corpus data in the corpus 1, a quantity of times of each primitive word segment occurring in the corpus 1, and a quantity of times of each phrase in the dictionary 1 occurring in the corpus 1. The language model library 1 includes the plurality of primitive word segments that is obtained after the device performs word segmentation on the corpus data in the corpus 1 and a conditional probability of each primitive word segment to other primitive word segments. A plurality of conditional probabilities in the language model library 1 are obtained based on the data stored in the dictionary 1. For a method for calculating, by the device, the plurality of conditional probabilities based on the data stored in the dictionary 1, refer to detailed descriptions of S 1204. Details are not described herein again.

It should be noted that, table 4 shows, only by using an example, the quantity of times of each primitive word segment occurring in the corpus a in the foregoing example, and table 5 shows, only by using an example, the quantity of times of each phrase pair occurring in the corpus a in the foregoing example. Usually, there is a relatively large amount of corpus data in a corpus, and the quantity of times of the primitive word segments or the phrase pairs occurring in the corpus is more than one or two times shown in FIG. 4 or FIG. 5.

For example, as shown in table 6, a quantity of times of the primitive word segment "sun" occurring in a corpus may be 2533, a quantity of times of the primitive word segment "setting in the west" occurring in the corpus may be 927, a quantity of times of the primitive word segment "is" occurring in the corpus may be 2417, and a quantity of times of the primitive word "nice" occurring in the corpus may be 746.

**Table 6**

| Quantity of occurrence times of primitive word segments | | | | |
|---|---|---|---|---|
| Primitive word segment | Sun | Setting in the west | Is | Nice |
| Quantity of occurrence times | 2533 | 927 | 2417 | 746 |

As shown in table 7, a quantity of times of the phrase pair "sun sun" occurring in a corpus may be 5, a quantity of times of the phrase pair "sun setting in the west" occurring in the corpus may be 827, a quantity of times of a primitive word segment "sun is" occurring in the corpus may be 0, a quantity of times of a primitive word segment "sun is nice" occurring in the corpus may be 9, and the like.

**Table 7**

| Quantity of occurrence times of phrase pairs | | | | |
|---|---|---|---|---|
| Quantity of occurrence times | Sun | Setting in the west | Is | Nice |
| Sun | 5 | 827 | 0 | 9 |
| Setting in the west | 2 | 0 | 608 | 1 |
| Is | 2 | 0 | 4 | 686 |
| Nice | 0 | 0 | 2 | 0 |

In the phrase pairs including the plurality of primitive word segments shown in table 7, a quantity of times of some phrase pairs occurring in the corpus may be 0. For example, as shown in table 7, the quantity of times of the phrase pair "sun is" occurring in the corpus is 0. Language is varied. Some users may prefer to use a phrase pair that is different from language habits of other users to describe an album. Therefore, if a quantity of times of some phrase pairs occurring in a dictionary is 0, this cannot meet language habits of all users. To resolve this problem, in this embodiment of this application, after obtaining the quantity of times of the phrase pair occurring in the corpus, the device may perform smoothing processing on the obtained quantity of occurrence times of the phrase pair.

For example, a method for performing, by the device, smoothing processing on the quantity of times of the phrase pair may include add-one smoothing processing and good-turning smoothing processing. For example, the device performs, in an add-one smoothing processing manner, smoothing processing on the quantity of occurrence times of the phrase pair shown in table 7. The device may add 1 to the quantity of occurrence times of the phrase pair whose quantity of occurrence times is 0 shown in table 7, to obtain a smoothed quantity of occurrence times of the phrase pair shown in table 8.

**Table 8**

| Quantity of occurrence times of phrase pairs | | | | |
|---|---|---|---|---|
| Quantity of occurrence times | Sun | Setting in the west | Is | Nice |
| Sun | 5 | 827 | 1 | 9 |
| Setting in the west | 2 | 1 | 608 | 1 |
| Is | 2 | 1 | 4 | 686 |
| Nice | 1 | 1 | 2 | 1 |

S 1204: The device calculates, based on the frequency at which each third primitive word segment occurs in the corpus and the frequency at which each phrase pair occurs in the corpus, a conditional probability of each third primitive word segment to other third primitive words.

For example, in this embodiment of this application, the device may use an N-Gram algorithm to calculate, based on a frequency at which each primitive word segment in a dictionary occurs in a corresponding corpus and a frequency at which each phrase pair in the dictionary occurs in the corresponding corpus, a conditional probability of each primitive word segment to other primitive word segments. Correspondingly, the language model library in this embodiment of this application is an N-Gram model library.

In a binary N-Gram model library, for a sequence (namely, a sentence) including M ($M \geq 2$) primitive word segments (for example, $W_1$, $W_2$, ..., and $W_M$), according to a chain rule and a Markov assumption, the device calculates a probability of occurrence of the sequence as follows: $P(W_1, W_2, .., W_M) = P(W_1) P(W_2|W_1) P(W_3|W_2), ..., P(W_M|W_{M-1})$, where $P(W_i|W_{i-1})$ is used to indicate a conditional probability of a primitive word segment Wi to a primitive word segment $W_{i-1}$, namely, a probability that the primitive word segment Wi occurs after the primitive word segment $W_{i-1}$ in a phrase "$W_{i-1}Wi$" when the primitive word segment Wi-i occurs in the phrase "$W_{i-1}W_i$". In this embodiment of this application, $P(W_i|W_{i-1})$ is referred to as a conditional probability of $W_{i-1}$, where i = 2, 3, ..., or M.

In the Markov assumption, a possibility that a primitive word segment in a phrase occurs is related only to an adjacent primitive word segment before the primitive word segment in the phrase. For example, it is assumed that a phrase is "sun setting in the west is nice." The phrase includes primitive word segments "sun", "setting in the west", "is", and "beautiful." According to the Markov assumption, a possibility of occurrence of the primitive word segment "setting in the west" is related only to the primitive word segment "sun", a possibility of occurrence of the primitive word segment "is" is related only to the primitive word segment "setting in the west", and a possibility of occurrence of the primitive word segment "beautiful" is related only to the primitive word segment "is."

A probability of occurrence of the single primitive word segment is $P(W_i)) = \frac{C(W_i)}{M} \times 100\%,$ and a conditional probability is $P(W_i|W_{i-1})) = \frac{C()}{C()} \times 100\%,$ where $C()$ is used to indicate a quantity of times that the primitive word segment Wi occurs, $C()$ is used to indicate a quantity of times that the primitive word segment $W_{i-1}$ occurs, and $C(W_{i-1}W_i))$ is used to indicate a quantity of times that a phrase pair "$W_{i-1}W_i$" occurs. For example, $C()$ is used to indicate a quantity of times that the primitive word segment "setting in the west" occurs, $C()$ is used to indicate a quantity of times that the primitive word segment "sun" occurs, and $C()$ is used to indicate a quantity of times that a phrase pair "sun setting in the west" occurs.

For example, with reference to table 6 and table 8, the device may obtain through calculation that a conditional probability of the primitive word segment "sun" to the primitive word segment "sun" is

$$P(sun|sun) = \frac{C()}{C()} \times 100\% = \frac{5}{2533} = 0.20\%;$$ a conditional probability of the primitive word segment "setting in the west" to the primitive word segment "sun" is P(setting in the west|sun) =

$$\frac{C(\text{sun setting in the west})}{C()} \times 100\% = \frac{827}{2533} = 30.65\%;$$ a conditional probability of the primitive word segment "is" to the primitive word segment "sun" is P(is|sun) = $\frac{C(\text{sun is})}{C(\text{sun})} \times 100\% = \frac{1}{2533} = 0.04\%;$ a conditional probability of the primitive word segment "nice" to the primitive ... word segment "sun" is $P(nice|sun) = \frac{C(\text{sun nice})}{C(\text{sun})} \times$

$$100\% = \frac{9}{2533} = 0.36\%.$$

With reference to table 6 and table 8, the device may obtain through calculation that a conditional probability of the primitive word segment "sun" to the primitive word segment "setting in the west" is P(sun|setting in the west) =

$$\frac{C(\text{setting in the west sun})}{C(\text{setting in the west})} \times 100\% = \frac{2}{927} \times 100\% = 0.22\%;$$ a conditional probability of the primitive word segment "setting in the west" to the primitive word segment "setting in the west" is P(setting in the west|setting in the

west) = $\frac{C(\text{setting in the west setting in the west})}{C(\text{setting in the west})} \times 100\% = \frac{1}{927} = 0.11\%;$ a conditional probability of the primitive word segment "is" to the primitive word segment "setting in the west" is

$$P(is|\text{setting in the west}) = \frac{C()}{C(\text{setting in the west})} \times 100\% = \frac{608}{927} = 65.59\%;$$ a conditional probability of the primitive word segment "nice" to the primitive word segment "setting in the west" is

$$P(nice|\text{setting in the west}) = \frac{C()}{C(\text{setting in the west})} \times 100\% = \frac{1}{927} = 0.11\%.$$

The device may calculate, by using a same calculation method, conditional probabilities of the primitive word segments "sun", "setting in the west", "is", and "nice" to the primitive word segment "is", and conditional probabilities of the primitive word segments "sun", "setting in the west", "is", and "nice" to the primitive word segment "nice." With reference to table 6 and table 8, the device may obtain through calculation an example table of the conditional probabilities shown in table 9.

**Table 9**

| Example conditional probabilities | | | | | |
|---|---|---|---|---|---|
| Primitive word segment | | Sun | Setting in the west | Is | Nice |
| Conditional probability | Sun | 0.20% | 30.65% | 0.04% | 0.36% |
| | Setting in the west | 0.22% | 0.11% | 65.59% | 0.11% |
| | Is | 0.08% | 0.04% | 0.17% | 22.38% |
| | Nice | 0.13% | 0.13% | 0.27% | 0.13% |

S1205: The device generates a language model library corresponding to a scenario of the corpus, where the corresponding language model library includes the plurality of third primitive word segments and the conditional probability of each third primitive word segment to other third primitive word segments.

The device may generate a language model library including the plurality of primitive word segments and the plurality of conditional probabilities of each primitive word segment shown in table 9.

According to the method for creating an album title provided in this embodiment of this application, the device may separately collect the corpus data of each of the preset plurality of scenarios, to obtain to plurality of corpora. Then, the device may analyze the corpus data in each corpus, to obtain a language model library corresponding to each scenario.

It may be understood that the user may manually set an album title for an album. In this embodiment of this application, the device may further analyze the album title manually set by the user, and update a language model library by using an analysis result in this embodiment of this application. Specifically, after S 1205, the method in this embodiment of this application may further include S1401 to S1405.

S1401: The device obtains an album title set by a user for a second album and performs word segmentation on the album title of the second album, to obtain a plurality of fourth primitive word segments.

For a specific method for performing, by the device, word segmentation on the album title of the second album to obtain the plurality of fourth primitive word segments, refer to detailed descriptions in the foregoing embodiment. Details are not described herein again.

S 1402: The device generates an album label of the second album based on content of a picture in the second album.

For a method for generating, by the device, the album label of the second album based on the content of the picture in the second album, refer to the specific method for generating, by the device, the album label of the first album based on the content of the picture in the first album in the foregoing embodiment. Details are not described herein again.

S 1403: The device determines a second language model library based on the album label of the second album, where the second language model library corresponds to the album label of the second album.

The device determines, based on the album label of the second album, a scenario corresponding to the second album from the preset plurality of scenarios, and determines a language model library (namely, a second language model library) of the scenario. For a method for determining the second language model library by the device, refer to the specific method for determining, by the device based on the album label of the first album, the scenario corresponding to the first album from the preset plurality of scenarios in the foregoing embodiment. Details are not described herein again.

S1404: The device updates the second language model library based on the plurality of fourth primitive word segments.

As shown in FIG. 14, the corpus, the dictionary, and the language model library are in a one-to-one correspondence in this embodiment of this application. Therefore, the device may update the second language model library in the following manner: updating, by the device based on the plurality of fourth primitive word segments, primitive word segments in a dictionary (marked as a dictionary X) corresponding to the second language model library, a quantity of occurrence times of each primitive word segment, and a quantity of occurrence times of each phrase pair; calculating, based on the updated quantity of occurrence times of each primitive word segment and the updated quantity of occurrence times of each phrase pair that are stored in the dictionary X, a conditional probability of each primitive word segment to other primitive word segments in the dictionary X; and updating the primitive word segments and the conditional probability in the second language model library based on the plurality of primitive word segments stored in the dictionary X and the calculated conditional probability of each primitive word segment to other primitive word segments.

For example, it is assumed that the dictionary X before updating includes three primitive word segments: a primitive word segment 1, a primitive word segment 2, and a primitive word segment 3. An album title set for the second album is "setting sun at the seaside." The device performs word segmentation on the album title "setting sun at the seaside", to obtain two third primitive word segments: "seaside" (the primitive word segment 1) and "setting sun" (a primitive word segment 4). The dictionary X before updating stores a quantity of occurrence times of the primitive word segments shown in table 10 and a quantity of occurrence times of phrase pairs shown in table 11.

**Table 10**

| Quantity of occurrence times of primitive word segments | | | |
|---|---|---|---|
| Primitive word segment | Primitive word segment 1 | Primitive word segment 2 | Primitive word segment 3 |
| Quantity of occurrence times | a | b | c |

As shown in table 10, a quantity of occurrence times of the primitive word segment 1 is a, a quantity of occurrence times of the primitive word segment 2 is b, and a quantity of occurrence times of the primitive word segment 3 is c.

**Table 11**

| Quantity of occurrence times of phrase pairs | | | |
|---|---|---|---|
| Quantity of occurrence times | Primitive word segment 1 | Primitive word segment 2 | Primitive word segment 3 |
| Primitive word segment 1 | d | e | f |
| Primitive word segment 2 | g | h | i |
| Primitive word segment 3 | j | k | m |

As shown in table 11, a quantity of occurrence times of a phrase pair including the primitive word segment 1 and the primitive word segment 1 is d, a quantity of occurrence times of a phrase pair including the primitive word segment 1 and the primitive word segment 2 is e, and a quantity of occurrence times of a phrase pair including the primitive word segment 1 and the primitive word segment 3 is f, a quantity of occurrences of a phrase pair including the primitive word segment 2 and the primitive word segment 1 is g, a quantity of occurrences of a phrase pair including the primitive word segment 2 and the primitive word segment 2 is h, and a quantity of occurrences of a phrase pair including the primitive word segment 2 and the primitive word segment 3 is i, a quantity of occurrences of a phrase pair including the primitive word segment 3 and the primitive word segment 1 is j, a quantity of occurrences of a phrase pair including the primitive word segment 3 and the primitive word segment 2 is k, and a quantity of occurrences of a phrase pair including the primitive word segment 3 and the primitive word segment 3 is m.

The device performs word segmentation on the album title to obtain the primitive word segment 1 and the primitive word segment 4. Therefore, the device may update, based on the primitive word segment 1 and the primitive word segment 4, the quantity of occurrence times of the primitive word segments shown in table 10, to obtain the quantity of occurrence times of the primitive word segments shown in table 12.

**Table 12**

| Quantity of occurrence times of primitive word segments | | | | |
|---|---|---|---|---|
| Primitive word segment | Primitive word segment 1 | Primitive word segment 2 | Primitive word segment 3 | Primitive word segment 4 |
| Quantity of occurrence times | a+1 | b | c | 1 |

The device may update, based on the primitive word segment 1 and the primitive word segment 4, the quantity of occurrence times of the phrase pairs shown in table 11, to obtain the quantity of occurrence times of the phrase pairs shown in table 13.

**Table 13**

| Quantity of occurrence times of phrase pairs | | | | |
|---|---|---|---|---|
| Quantity of occurrence times | Primitive word segment 1 | Primitive word segment 2 | Primitive word segment 3 | Primitive word segment 4 |
| Primitive word segment 1 | d | e | f | 1 |
| Primitive word segment 2 | g | h | i | 0 |
| Primitive word segment 3 | j | k | m | 0 |
| Primitive word segment 4 | 0 | 0 | 0 | 0 |

Then, the device may perform S 1204 to calculate, based on the plurality of primitive word segments stored in the dictionary X, to obtain the plurality of conditional probabilities, and update the primitive word segments and the conditional probabilities in the second language model library. Optionally, the device may further perform smoothing processing on the quantity of occurrence times of the phrase pairs shown in table 13.

In this embodiment of this application, the device may further analyze the album title manually set by the user, and update the language model library by using the analysis result. In this way, the primitive word segments and the conditional probabilities of the primitive word segments in the language model library in this embodiment of this application may vary with the user's preference and habit. Therefore, the album title created based on the primitive word segments in the updated language model library better matches a scenario in which a picture in the album is taken, and is more suitable for the content of the corresponding album and the user's language style.

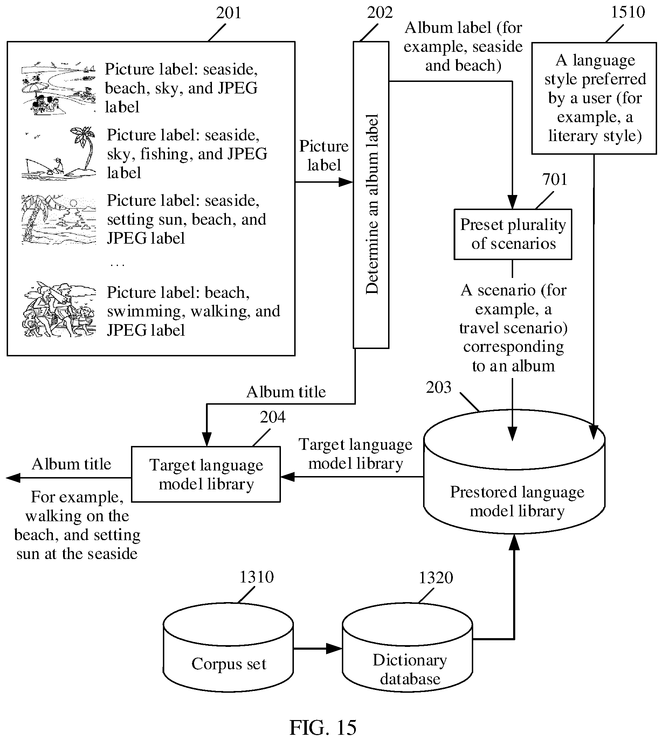

It may be understood that different users describe or explain a same thing (for example, an album) in their different preferred language styles. Based on this, in this embodiment of this application, as shown in FIG. 15, when the device creates the album title of the first album, the device may consider not only the scenario determined based on the album label of the first album, but also a language style 1510 preferred by the user. The created album title can not only better match the content of the first album, but also be more suitable for the user's language style. Specifically, before S302 or S302a, the method in this embodiment of this application may further include S1501.

S 1501: The device obtains a first language style, where the first language style is a language style preferred by a user.

The language style in this embodiment of this application may include a literary style, an everyday language style, a humorous style, an anthropomorphic style, and the like.

In a possible implementation, the device may collect statistics on a style of editing a text by the user, and determine the first language style. Specifically, S1501 may include S 1501a.

S 1501a: The device collects statistics on a language style of text information and/or voice information that are/is entered by the user on the device, and determines the first language style.

After receiving the text information (namely, the text) or the voice information entered by the user on the device, the device may analyze the received text information or the voice information, to determine the language style of the text information or the voice information. Then, the device may collect statistics on a probability that each language style occurs in a result (namely, the language style) obtained by analyzing the text information and the voice information collected within a preset time period (for example, one month, three months, or half a year), and determine a language style having a highest probability as the first language style. A probability that a language style occurs is a ratio of a quantity of times that the language style occurs in the analysis result to a total quantity of the analysis results.

Optionally, after performing S 1501a to obtain the first language style, the device may store the first language style on the device. Then, when creating the album title for the album, the device may directly obtain the first language style from the device, and the device does not need to perform S 1501a, when creating the album title, to determine the first language style. The device directly obtains the language style stored on the device. This can reduce an amount of calculating by the device when the device creates the album title, and improve efficiency of creating the album title.

Certainly, when creating the album title, the device may perform S 1501a to obtain the first language style in real time. A specific method for obtaining the first language style by the device is not limited in this embodiment of this application.

It may be understood that, the device may periodically collect statistics on the language style of the text information and/or the voice information entered by the user on the device, to update the language style stored on the device in a timely manner.

Optionally, after performing S1501a to obtain the first language style, the device may store the first language style on the device, so that the device directly may obtain the first language style stored on the device when creating the album title for the album. A language style stored on a terminal is directly obtained. This can reduce an amount of calculating by the device when the device creates the album title, and improve efficiency of creating the album title. Certainly, when creating the album title, the device may perform S 1501a to obtain the first language style in real time. A specific method for obtaining the first language style by the device is not limited in this embodiment of this application.

In another possible implementation, the device may display a style selection screen for the user to select a language style preferred by the user, and the user selects the language style preferred by the user on the style selection screen. Specifically, before S302 or S302a, the method in this embodiment of this application may further include S 1501b and S 1501c. In other words, S1501 may include S 1501b and S 1501c.

S1501b: The device displays a style selection screen, where the style selection screen includes a plurality of language style options.

For example, when the device takes a picture or downloads and saves a picture for the first time after factory delivery, the device may display a style selection screen 403 shown in (b) in FIG. 4, to prompt the user to select a language style preferred by the user. Alternatively, the device may further periodically collect statistics on a quantity of newly added pictures on the device, and when the quantity of newly added pictures exceeds a preset picture threshold, display the style selection screen 403 shown in (b) in FIG. 4, to prompt the user to select a language style preferred by the user. The style selection screen 403 shown in (b) in FIG. 4 includes a "literary style" option, an "everyday language style" option, a "humorous style" option, and other language style options, and an "OK" button. The mobile phone 100 may determine, in response to a selection operation performed by the user on a language style option on the style selection screen 403 and a tap operation performed by the user on the "OK" button, a language style (namely, the first language style) preferred by the user.

Optionally, the style selection screen 403 shown in (b) in FIG. 4 may further include prompt information 404. The prompt information 404 is used to prompt the user to select a language style preferred by the user. For example, the prompt information 404 may be "Select a language style you prefer. The mobile phone will use the language style selected by you to automatically create an album title for you."

Alternatively, a display screen of an "album" application on the device may include a function option or a function button that is used to trigger the device to display the style selection screen. The device may display, in response to a tap operation performed by the user on the function option or the function button, the style selection screen. For example, the device is the mobile phone 100 shown in (a) in FIG. 4. After receiving the tap operation performed by the user on a function button 402, the mobile phone 100 may display, in response to the tap operation performed by the user on the function button 402, the style selection screen 403 shown in (b) in FIG. 4.

S 1501c: The device determines, in response to a selection operation performed by the user on any of the plurality of language style options, a language style corresponding to the language style option selected by the user as the first language style.

It should be noted that, in this embodiment of this application, the device may first perform S301 and then S 1501, or the device may first perform S 1501 and then S301, or the device may perform S301 and S1501 at the same time. A sequence of performing, by the device, S301 and S1501 is not limited in this embodiment of this application.

Optionally, after obtaining the first language style, the device may store the first language style on the device. Then, when creating the album title for the album, the device may directly obtain the first language style from the device, and the device does not need to collect, when creating the album title, the statistics on the language style of the text information and/or the voice information entered by the user on the device, or does not need to display the style selection screen, to determine the first language style. A language style stored on a terminal is directly obtained when an album title is created for an album. This can reduce an amount of calculating by the device when the device creates the album title, and improve efficiency of creating the album title.

Certainly, when creating the album title, the device may perform S 1501a or S1501b-S1501c to obtain the first language style in real time. A specific method for obtaining the first language style by the device is not limited in this embodiment of this application.

Correspondingly, in this embodiment of this application, the first language model library is the language model library of the scenario corresponding to the album label of the first album, and the primitive word segments in the first language model library correspond to the first language style. In other words, the preset language model library 203 shown in FIG. 15 includes one or more language model libraries for each of the preset plurality of scenarios. In addition, each language model library for each scenario corresponds to one language style. That one language model library corresponds to one language style (for example, a language style a) means that primitive word segments in the language model library meet the language style a.

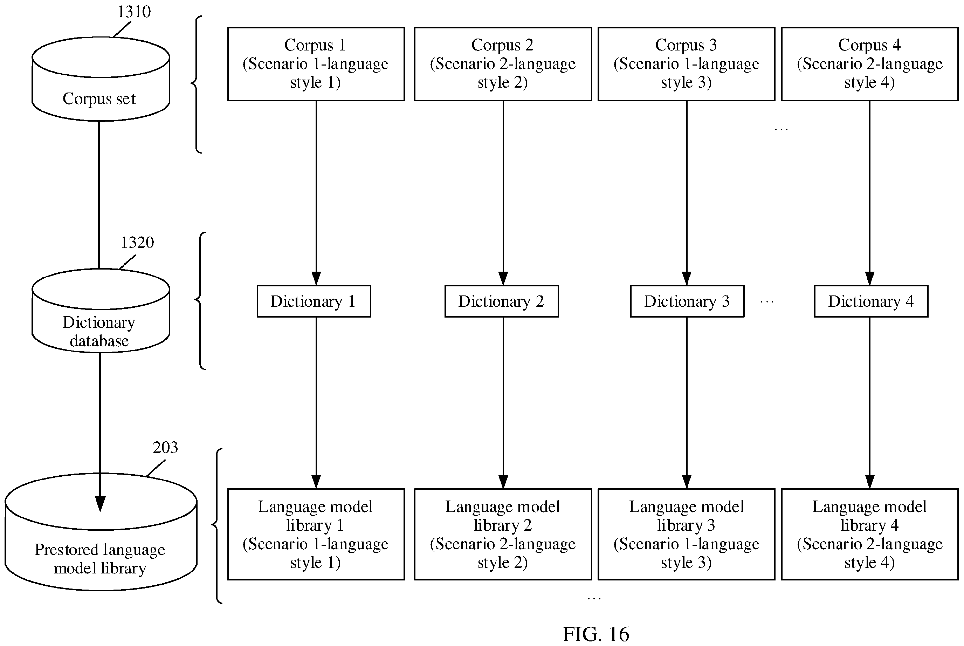

For example, as shown in FIG. 16, with reference to FIG. 14, the corpus 1 includes corpus data that is of the scenario 1 and that corresponds to a language style 1. The corpus data in the corpus 1 is a frequently used phrase (namely, the album title) that is collected by the device and that is used to describe a picture in the scenario 1 by using the language style 1. Correspondingly, the language model library 1 is a language model library that is of the scenario 1 and that corresponds to the language style 1. The corpus 3 includes corpus data that is of the scenario 1 and that corresponds to a language style 3. The corpus data in the corpus 3 is a frequently used phrase that is collected by the device and that is used to describe a picture in the scenario 1 by using the language style 3. Correspondingly, the language model library 3 is a language model library that is of the scenario 1 and that corresponds to the language style 3.

As shown in FIG. 16, with reference to FIG. 14, the corpus 2 includes corpus data that is of the scenario 2 and that corresponds to a language style 2. The corpus data in the corpus 2 is a frequently used phrase that is collected by the device and that is used to describe a picture in the scenario 2 by using the language style 2. Correspondingly, the language model library 2 is a language model library that is of the scenario 2 and that corresponds to the language style 2. The corpus 4 includes corpus data that is of the scenario 2 and that corresponds to a language style 4. The corpus data in the corpus 4 is a frequently used phrase that is collected by the device and that is used to describe a picture in the scenario 2 by using the language style 4. Correspondingly, the language model library 4 is a language model library that is of the scenario 2 and that corresponds to the language style 4. Correspondingly, S1201 may be replaced with S1201a.

S 1201a: The device obtains a plurality of corpora of each scenario, where each of the plurality of corpora includes corpus data of one language style, and corpus data included in different corpora has different language styles.

It should be noted that the language style 1 is different from the language style 3, and the language style 2 is different from the language style 4. The language style 1, the language style 2, and the language style 4 may be the same, or may be different. The language style 3, the language style 2, and the language style 4 may be the same or may be different.

In this embodiment of this application, when creating the album title of the first album, the device may consider not only the scenario determined based on the album label of the first album, but also the language style preferred by the user. The created album title can not only better match the content of the first album, but also be more suitable for the user's language style.

It can be understood that, to implement the foregoing functions, the device and the like include corresponding hardware structures and/or software modules for performing the functions. A person skilled in the art should easily be aware that, in combination with the examples described in the embodiments disclosed in this specification, units, and algorithms, and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of the present invention, division into modules is an example, is merely logical function division, and may be other division in an actual implementation.

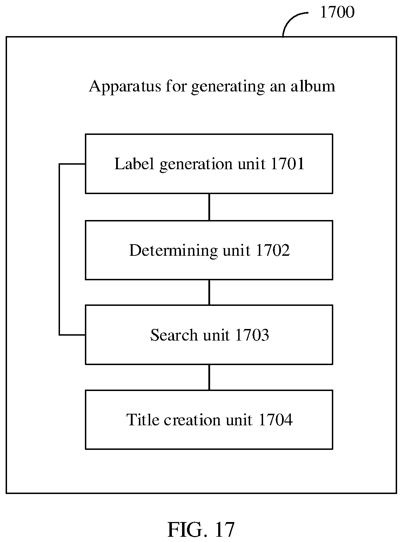

When functional modules are obtained through division based on corresponding functions, as shown in FIG. 17, an embodiment of this application provides an apparatus 1700 for generating an album. The apparatus 1700 for generating an album is included in the device in the embodiments of this application. The apparatus 1700 for generating an album includes a label generation unit 1701, a determining unit 1702, a search unit 1703, and a title creation unit 1704.

The label generation unit 1701 is configured to support the apparatus 1700 for generating an album or the device that includes the apparatus 1700 for generating an album to perform S301, S301a to S301d, and S1402 in the foregoing method embodiments, and/or is configured to perform another process of a technology described in this specification. The determining unit 1702 is configured to support the apparatus 1700 for generating an album or the device that includes the apparatus 1700 for generating an album to perform S302, S302a, and S1403 in the foregoing method embodiments, and/or is configured to perform another process of the technology described in this specification. The search unit 1703 is configured to support the apparatus 1700 for generating an album or the device that includes the apparatus 1700 for generating an album to perform S303, and S303a to S303b in the foregoing method embodiments, and/or configured for another process of the technology described in this specification. The title creation unit 1704 is configured to support the apparatus 1700 for generating an album or the device that includes the apparatus 1700 for generating an album to perform S304 and S304a in the foregoing method embodiments, and/or is configured to perform another process of the technology described in this specification.

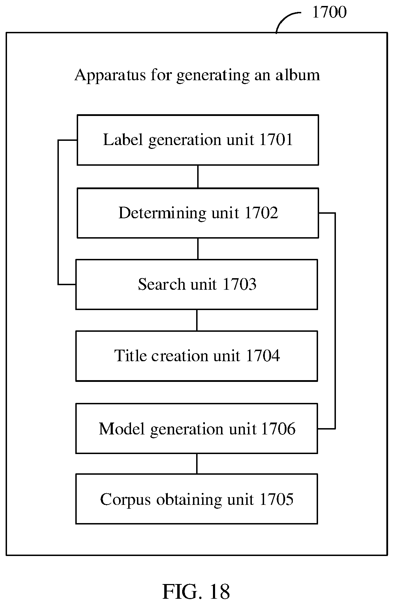

Further, as shown in FIG. 18, the apparatus 1700 for generating an album may further include a corpus obtaining unit 1705 and a model generation unit 1706. The corpus obtaining unit 1705 is configured to support the apparatus 1700 for generating an album or the device that includes the apparatus 1700 for generating an album to perform S1201 and S1201a in the foregoing method embodiments, and/or perform another process of the technology described in this specification. The model generation unit 1706 is configured to support the apparatus 1700 for generating an album or the device that includes the apparatus 1700 for generating an album to perform S1202 to S1205 in the foregoing method embodiments, and/or configured for another process of the technology described in this specification.

Further, the apparatus 1700 for generating an album may further include a word segment obtaining unit and an update unit. The word segment obtaining unit is configured to support the apparatus 1700 for generating an album or the device that includes the apparatus 1700 for generating an album to perform S1401 in the foregoing method embodiments, and/or configured for another process of the technology described in this specification. The update unit is configured to support the apparatus 1700 for generating an album or the device that includes the apparatus 1700 for generating an album to perform S1404 in the foregoing method embodiments, and/or configured for another process of the technology described in this specification.

Further, the apparatus 1700 for generating an album may further include a style obtaining unit. The style obtaining unit is configured to support the apparatus 1700 for generating an album or the device that includes the apparatus 1700 for generating an album to perform S1501, S1501a, and S1501c in the foregoing method embodiments, and/or configured for another process of the technology described in this specification.

Further, the apparatus 1700 for generating an album may further include a display unit and a selection unit. The display unit is configured to support the apparatus 1700 for generating an album or the device that includes the apparatus 1700 for generating an album to perform the operations of displaying the album title in S901 and S902 in the foregoing method embodiments, S1101, and S1501b, and/or another process of the technology described in this specification. The selection unit is configured to support the apparatus 1700 for generating an album or the device that includes the apparatus 1700 for generating an album to perform the selection operation in S902 in the foregoing method embodiments, and/or configured for another process of the technology described in this specification.

Certainly, the apparatus 1700 for generating an album includes but is not limited to the units or modules listed above. For example, the apparatus 1700 for generating an album may further include a communications unit. The communications unit is configured to send and receive a message or information to and from another device. In addition, functions that the functional units can specifically implement include but are not limited to the functions corresponding to the method steps in the foregoing examples. For detailed descriptions about other units of the apparatus 1700 for generating an album, refer to the detailed descriptions about the method steps corresponding to the units. Details are not described again herein.

When an integrated unit is used, the label generation unit 1701, the determining unit 1702, the search unit 1703, the title creation unit 1704, the corpus obtaining unit 1705, the model generation unit 1706, the word segment obtaining unit, the update unit, the style obtaining unit, the selection unit, and the like may be integrated into one processing module for implementation; the communications unit may be an RF circuit, a Wi-Fi module, or a Bluetooth module of a terminal; a storage unit may be a storage module of the terminal; and the display unit may be a display module, for example, a display (touchscreen).

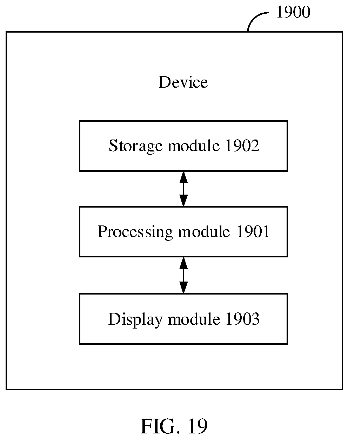

FIG. 19 is a schematic diagram of a possible structure of a device according to an embodiment of this application. The device 1900 includes a processing module 1901, a storage module 1902, and a display module 1903. The processing module 1901 is configured to control and manage the device. The display module 1903 is configured to display an image generated by the processing module 1901. The storage module 1902 is configured to save program code and data of the device. Further, the device 1900 may further include a communications module. The communications module is configured to communicate with another terminal. For example, the communications module is configured to send or receive a picture to or from another device.

The processing module 1901 may be a processor or a controller, such as a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or a combination thereof. The controller/processor may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communications module may be a transceiver, a transceiver circuit, a communications interface, or the like. The storage module 1902 may be a memory.

When the processing module 1901 is a processor (the processor 101 shown in FIG. 1), the communications module is an RF circuit (the radio frequency circuit 102 shown in FIG. 1), and the storage module 1902 is a memory (the memory 103 shown in FIG. 1), and the display module 1903 is a touchscreen (including the touchpad 104-1 and the display screen 104-2 shown in FIG. 1), the device provided in this application may be the mobile phone 100 shown in FIG. 1. The communications modules may include not only the RF circuit, but also the Wi-Fi module and the Bluetooth module. The communications modules such as the RF circuit, the Wi-Fi module, and the Bluetooth module may be collectively referred to as a communications interface. The processor, the communications interface, the touchscreen, and the memory may be coupled together by using a bus.

An embodiment of this application further provides a control device, including a processor and a memory. The memory is configured to store computer program code, and the computer program code includes a computer instruction. When executing the computer instruction, the processor performs the information input method described in the foregoing method embodiment.

An embodiment of this application further provides a computer storage medium. The computer storage medium stores computer program code. When the processor executes the computer program code, the electronic device performs related method steps in any one of FIG. 3, FIG. 6, FIG. 9, and FIG. 12 to implement the method in the foregoing embodiments.

An embodiment of this application further provides a computer program product. When the computer program product runs on a computer, the computer is enabled to perform related method steps in any one of FIG. 3, FIG. 6, FIG. 9, and FIG. 12 to implement the method in the foregoing embodiments.

The apparatus 1700 for generating an album, an apparatus 1800 for generating an album, a terminal 1900, the computer storage medium, or the computer program product provided in this application are all configured to perform the corresponding methods described above. Therefore, for advantageous effects that can be achieved by apparatus 1700 for generating an album, an apparatus 1800 for generating an album, a terminal 1900, the computer storage medium, or the computer program product, refer to the advantageous effects of the corresponding methods. Details are not described herein again.

The foregoing descriptions about implementations allow a person skilled in the art to understand that, for ease of description and brevity, division of the foregoing functional modules is used as an example for description. In actual application, the foregoing functions can be allocated to different modules and implemented according to a requirement. In other words, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units.

Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for creating an album title, wherein the method comprises:

   generating an album label of a first album based on content of a picture in the first album;
   determining a first language model library based on the album label of the first album, wherein the first language model library corresponds to the label of the first album, and comprises a plurality of primitive word segments;
   searching the first language model library for a primitive word segment that matches the album label of the first album; and
   creating an album title of the first album based on the matched primitive word segment.

2. The method according to claim 1, wherein the determining a first language model library based on the album label of the first album comprises:
   determining the first language model library from a prestored language model library based on the album label of the first album, wherein the prestored language model library comprises a language model library of each of a preset plurality of scenarios, and the first language model library is a language model library of a scenario corresponding to the album label of the first album.

3. The method according to claim 1 or 2, wherein the first language model library further comprises a conditional probability of one primitive word segment to another primitive word segment in the first language model library; and
   the conditional probability of one primitive word segment to another primitive word segment is: in a phrase comprised in the first language model library, when the another primitive word segment occurs in the phrase, a probability that the one primitive word segment occurs after the another primitive word segment in the phrase;
   the searching the first language model library for a primitive word segment that matches the album label of the first album comprises:

   searching, in the plurality of primitive word segments in the first language model library, for a first primitive word segment that matches the album label of the first album; and
   searching, in the plurality of primitive word segments in the first language model library, for a second primitive word segment, wherein a conditional probability of the second primitive word segment to the first primitive word segment is greater than a first preset threshold; and
   the creating an album title of the first album based on the matched primitive word segment comprises:
   using a phrase comprising the first primitive word and the second primitive word as the album title of the first album.

4. The method according to any one of claims 1 to 3, wherein before the determining a first language model library based on the album label of the first album, the method further comprises:

   obtaining a corpus of each of the preset plurality of scenarios, wherein the corpus of the scenario comprises a plurality of pieces of corpus data of the scenario;

performing the following operations on each corpus:

performing word segmentation on all corpus data in one corpus to obtain a plurality of third primitive word segments;

collecting statistics on a frequency at which each of the plurality of third primitive word segments occurs in the corpus and a frequency at which each of a plurality of phrase pairs occurs in the corpus, wherein the phrase pair comprises two third primitive words adjacent in a preset order in same corpus data;

calculating, based on the frequency at which each third primitive word segment occurs in the corpus and the frequency at which each phrase pair occurs in the corpus, a conditional probability of each third primitive word segment to other third primitive words; and

generating a language model library corresponding to a scenario of the corpus, wherein the corresponding language model library comprises the plurality of third primitive word segments and the conditional probability of each third primitive word segment to other third primitive word segments.

5. The method according to any one of claims 1 to 4, wherein the method further comprises:

obtaining an album title set by a user for a second album and performing word segmentation on the album title of the second album, to obtain a plurality of fourth primitive word segments;

generating an album label of the second album based on content of a picture in the second album;

determining a second language model library based on the album label of the second album, wherein the second language model library corresponds to the album label of the second album; and

updating the second language model library based on the plurality of fourth primitive word segments.

6. The method according to claim 2, wherein before the determining the first language model library from a prestored language model library based on the album label of the first album, the method further comprises:

obtaining a first language style, wherein the first language style is a language style preferred by a user;

each scenario comprises a plurality of language model libraries, primitive word segments in each language model library correspond to one language style, primitive word segments in different language model libraries correspond to different language styles, and primitive word segments in the first language model library correspond to the first language style.

7. The method according to claim 6, wherein before the determining the first language model library from a prestored language model library based on the album label of the first album, the method further comprises:

obtaining a plurality of corpora of each scenario, wherein each of the plurality of corpora comprises corpus data of one language style, and corpus data comprised in different corpora have different language styles;

performing the following operations on each corpus:

performing word segmentation on all corpus data in one corpus to obtain a plurality of fifth primitive word segments;

collecting statistics on a frequency at which each of the plurality of fifth primitive word segments occurs in the corpus and a frequency at which each of a plurality of phrase pairs occurs in the corpus, wherein the phrase pair comprises two fifth primitive words adjacent in a preset order in same corpus data;

calculating, based on the frequency at which each fifth primitive word occurs in the corpus and the frequency at which each phrase pair occurs in the corpus, a conditional probability of each fifth primitive word segment to other fifth primitive word segments; and

generating a scenario of the corpus and a language model library corresponding to a language style of the corpus, wherein the corresponding language model library comprises the plurality of fifth primitive word segments and the conditional probability of each fifth primitive word segment to other fifth primitive word segments.

8. The method according to any one of claims 1 to 7, wherein the generating an album label of a first album based on content of a picture in the first album comprises:

generating the first album, wherein the first album comprises a plurality of pictures;

generating a picture label of a corresponding picture based on each picture in the first album; and

collecting statistics on a total quantity of obtained picture labels, and a quantity of each type of picture labels in all the obtained picture labels; and
calculating a ratio of the quantity of each type of picture labels to the total quantity of picture labels, and determining a picture label whose ratio is greater than a second preset threshold as the album label of the first album.

9. The method according to claim 6 or 7, wherein the obtaining a first language style comprises:

collecting statistics on a style of editing a text by the user, and determining the first language style; or
displaying a style selection screen, wherein the style selection screen comprises a plurality of language style options, and determining, in response to a selection operation performed by the user on any of the plurality of language style options, a language style corresponding to the language style option selected by the user as the first language style.

10. An apparatus for creating an album title, wherein the apparatus comprises a label generation unit, a determining unit, a search unit, and a title creation unit, wherein
the label generation unit is configured to generate an album label of a first album based on content of a picture in the first album;
the determining unit is configured to determine a first language model library based on the album label that is of the first album and that is generated by the label generation unit, wherein the first language model library corresponds to the label of the first album, and comprises a plurality of primitive word segments;
the search unit is configured to search the first language model library determined by the determining unit for a primitive word segment that matches the album label of the first album; and
the title creation unit is configured to create an album title of the first album based on the matched primitive word segment found by the search unit.

11. The apparatus according to claim 10, wherein the determining unit is specifically configured to:
determine the first language model library from a prestored language model library based on the album label that is of the first album and that is generated by the label generation unit; and the prestored language model library comprises a language model library of each of a preset plurality of scenarios, and the first language model library is a language model library of a scenario corresponding to the album label of the first album.

12. The apparatus according to claim 10 or 11, wherein the first language model library determined by the determining unit further comprises a conditional probability of one primitive word segment to another primitive word segment in the first language model library; and the conditional probability of one primitive word segment to another primitive word segment is: in a phrase comprised in the first language model library, when the another primitive word segment occurs in the phrase, a probability that the one primitive word segment occurs after the another primitive word segment in the phrase;
the search unit is specifically configured to: search, in the plurality of primitive word segments that are in the first language model library and that are determined by the determining unit, for a first primitive word segment that matches the album label of the first album; and search, in the plurality of primitive word segments that are in the first language model library and that are determined by the determining unit, for a second primitive word segment, wherein a conditional probability of the second primitive word segment to the first primitive word segment is greater than a first preset threshold; and
the title creation unit is specifically configured to use a phrase comprising the first primitive word and the second primitive word that are found by the search unit as the album title of the first album.

13. The apparatus according to any one of claims 10 to 12, wherein the apparatus further comprises a corpus obtaining unit and a model generation unit, wherein
the corpus obtaining unit is configured to: before the determining unit determines the first language model library based on the album label of the first album, obtain a corpus of each of the preset plurality of scenarios, wherein the corpus of the scenario comprises a plurality of pieces of corpus data of the scenario;
the model generation unit is configured to perform the following operations on each corpus obtained by the corpus obtaining unit:

performing word segmentation on all corpus data in one corpus to obtain a plurality of third primitive word segments;
collecting statistics on a frequency at which each of the plurality of third primitive word segments occurs in the corpus and a frequency at which each of a plurality of phrase pairs occurs in the corpus, wherein the phrase pair comprises two third primitive words adjacent in a preset order in same corpus data;

calculating, based on the frequency at which each third primitive word segment occurs in the corpus and the frequency at which each phrase pair occurs in the corpus, a conditional probability of each third primitive word segment to other third primitive words; and

generating a language model library corresponding to a scenario of the corpus, wherein the corresponding language model library comprises the plurality of third primitive word segments and the conditional probability of each third primitive word segment to other third primitive word segments.

14. The apparatus according to any one of claims 10 to 13, wherein the apparatus further comprises a word segment obtaining unit and an update unit, wherein

the word segment obtaining unit is configured to obtain an album title set by a user for a second album and perform word segmentation on the album title of the second album, to obtain a plurality of fourth primitive word segments;

the label generation unit is further configured to generate an album label of the second album based on content of a picture in the second album;

the determining unit is further configured to determine a second language model library based on the album label that is of the second album and that is generated by the label generation unit, wherein the second language model library corresponds to the album label of the second album; and

the update unit is configured to update the second language model library determined by the determining unit based on the plurality of fourth primitive word segments obtained by the word segment obtaining unit.

15. The apparatus according to claim 11, wherein the apparatus further comprises a style obtaining unit, wherein

the style obtaining unit is configured to: before the determining unit determines the first language model library from the prestored language model library based on the album label of the first album, obtain a first language style, wherein the first language style is a language style preferred by a user;

each scenario comprises a plurality of language model libraries, primitive word segments in each language model library correspond to one language style, primitive word segments in different language model libraries correspond to different language styles, and primitive word segments in the first language model library correspond to the first language style.

16. The apparatus according to claim 15, wherein the apparatus further comprises a corpus obtaining unit and a model generation unit, wherein

the corpus obtaining unit is configured to: before the determining unit determines the first language model library from the prestored language model library based on the album label of the first album, obtain a plurality of corpora of each scenario, wherein each of the plurality of corpora comprises corpus data of one language style, and corpus data comprised in different corpora have different language styles;

the model generation unit is configured to perform the following operations on each corpus generated by the corpus obtaining unit:

performing word segmentation on all corpus data in one corpus to obtain a plurality of fifth primitive word segments;

collecting statistics on a frequency at which each of the plurality of fifth primitive word segments occurs in the corpus and a frequency at which each of a plurality of phrase pairs occurs in the corpus, wherein the phrase pair comprises two fifth primitive words adjacent in a preset order in same corpus data;

calculating, based on the frequency at which each fifth primitive word occurs in the corpus and the frequency at which each phrase pair occurs in the corpus, a conditional probability of each fifth primitive word segment to other fifth primitive word segments; and

generating a scenario of the corpus and a language model library corresponding to a language style of the corpus, wherein the corresponding language model library comprises the plurality of fifth primitive word segments and the conditional probability of each fifth primitive word segment to other fifth primitive word segments.

17. The apparatus according to any one of claims 10 to 16, wherein that the label generation unit is configured to generate an album label of a first album based on content of a picture in the first album comprises:

the label generation unit is specifically configured to:

generate the first album, wherein the first album comprises a plurality of pictures;

generate a picture label of a corresponding picture based on each picture in the first album; and

collect statistics on a total quantity of obtained picture labels, and a quantity of each type of picture labels in all the obtained picture labels; and

calculate a ratio of the quantity of each type of picture labels to the total quantity of picture labels, and determine a picture label whose ratio is greater than a second preset threshold as the album label of the first album.

18. The apparatus according to claim 15 or 16, wherein the style obtaining unit is specifically configured to:

collect statistics on a style of editing a text by the user, and determining the first language style; or
display a style selection screen, wherein the style selection screen comprises a plurality of language style options, and determine, in response to a selection operation performed by the user on any of the plurality of language style options, a language style corresponding to the language style option selected by the user as the first language style.

19. A device, comprising a processor, a memory, and a display, wherein the memory and the display are coupled to the processor, the memory is configured to store computer program code, the computer program code comprises a computer instruction, the memory comprises a non-volatile storage medium, and when the processor executes the computer instruction, the processor is configured to generate an album label of a first album based on content of a picture in the first album; determine a first language model library based on the album label of the first album, wherein the first language model library corresponds to the label of the first album, and comprises a plurality of primitive word segments; search the first language model library for a primitive word segment that matches the album label of the first album; and create an album title of the first album based on the matched primitive word segment; and
the display is configured to display the picture in the first album according to an instruction of the processor, and display the album title that is of the first album and that is generated by the processor.

20. The device according to claim 19, wherein the memory is further configured to store the first language model library.

21. The device according to claim 19 or 20, wherein that the processor is configured to determine a first language model library based on the album label of the first album comprises:
the processor is configured to determine the first language model library from a prestored language model library based on the album label of the first album, wherein the prestored language model library comprises a language model library of each of a preset plurality of scenarios, and the first language model library is a language model library of a scenario corresponding to the album label of the first album.

22. The device according to any one of claims 19 to 21, wherein the first language model library further comprises a conditional probability of one primitive word segment to another primitive word segment in the first language model library; and the conditional probability of one primitive word segment to another primitive word segment is: in a phrase comprised in the first language model library, when the another primitive word segment occurs in the phrase, a probability that the one primitive word segment occurs after the another primitive word segment in the phrase;

that the processor is configured to search the first language model library for a primitive word segment that matches the album label of the first album comprises:
the processor is configured to search, in the plurality of primitive word segments in the first language model library, for a first primitive word segment that matches the album label of the first album; and search, in the plurality of primitive word segments in the first language model library, for a second primitive word segment, wherein a conditional probability of the second primitive word segment to the first primitive word segment is greater than a first preset threshold; and
that the processor is configured to create an album title of the first album based on the matched primitive word segment comprises:
the processor is configured to use a phrase comprising the first primitive word and the second primitive word as the album title of the first album.

23. The device according to any one of claims 19 to 22, wherein the processor is further configured to: before determining the first language model library based on the album label of the first album, obtain a corpus of each of the preset plurality of scenarios, wherein the corpus of the scenario comprises a plurality of pieces of corpus data of the scenario; perform the following operations on each corpus: performing word segmentation on all corpus data in one corpus to obtain a plurality of third primitive word segments; collecting statistics on a frequency at which each of the plurality of third primitive word segments occurs in the corpus and a frequency at which each of a plurality of phrase pairs occurs in the corpus, wherein the phrase pair comprises two third primitive words adjacent in a preset order in same corpus data; calculating, based on the frequency at which each third primitive word segment occurs in the corpus and the frequency at which each phrase pair occurs in the corpus, a conditional probability of each third primitive word segment to other third primitive words; and generating a language model library corresponding to a scenario of the corpus, wherein the corresponding language model library comprises the plurality of third primitive word segments and the conditional probability of each third primitive word segment to other third primitive word segments.

24. The device according to any one of claims 19 to 23, wherein the processor is further configured to obtain an album title set by a user for a second album and perform word segmentation on the album title of the second album, to obtain a plurality of fourth primitive word segments; generate an album label of the second album based on content of a picture in the second album; determine a second language model library based on the album label of the second album, wherein the second language model library corresponds to the album label of the second album; and update the second language model library based on the plurality of fourth primitive word segments.

25. The device according to claim 21, wherein the processor is further configured to: before determining the first language model library from the prestored language model library based on the album label of the first album, obtain a first language style, wherein the first language style is a language style preferred by a user;
each scenario comprises a plurality of language model libraries, primitive word segments in each language model library correspond to one language style, primitive word segments in different language model libraries correspond to different language styles, and primitive word segments in the first language model library correspond to the first language style.

26. The device according to claim 25, wherein the processor is further configured to: before determining the first language model library from the prestored language model library based on the album label of the first album, obtain a plurality of corpora of each scenario, wherein each of the plurality of corpora comprises corpus data of one language style, and corpus data comprised in different corpora have different language styles; perform the following operations on each corpus: performing word segmentation on all corpus data in one corpus to obtain a plurality of fifth primitive word segments; collecting statistics on a frequency at which each of the plurality of fifth primitive word segments occurs in the corpus and a frequency at which each of a plurality of phrase pairs occurs in the corpus, wherein the phrase pair comprises two fifth primitive words adjacent in a preset order in same corpus data; calculating, based on the frequency at which each fifth primitive word occurs in the corpus and the frequency at which each phrase pair occurs in the corpus, a conditional probability of each fifth primitive word segment to other fifth primitive word segments; and generating a scenario of the corpus and a language model library corresponding to a language style of the corpus, wherein the corresponding language model library comprises the plurality of fifth primitive word segments and the conditional probability of each fifth primitive word segment to other fifth primitive word segments.

27. The device according to claim 23 or 26, wherein the memory is further configured to store the corpus.

28. The device according to any one of claims 19 to 27, wherein that the processor is configured to generate an album label of a first album based on content of a picture in the first album comprises:
the processor is configured to generate the first album, wherein the first album comprises a plurality of pictures; generate a picture label of a corresponding picture based on each picture in the first album; and collect statistics on a total quantity of obtained picture labels, and a quantity of each type of picture labels in all the obtained picture labels; and calculate a ratio of the quantity of each type of picture labels to the total quantity of picture labels, and determine a picture label whose ratio is greater than a second preset threshold as the album label of the first album.

29. The device according to claim 25 or 26, wherein that the processor is configured to obtain a first language style comprises:

the processor is configured to collect statistics on a style of editing a text by the user, and determine the first language style; or
the display is further configured to display a style selection screen, wherein the style selection screen comprises a plurality of language style options; and
the processor is further configured to determine, in response to a selection operation performed by the user on any of the plurality of language style options displayed by the display, a language style corresponding to the language style option selected by the user as the first language style.

30. A control device, wherein the control device comprises a processor and a memory, the memory is configured to store computer program code, the computer program code comprises a computer instruction, and when executing the computer instruction, the processor performs the method for creating an album title according to any one of claims 1 to 9.

31. A computer storage medium, comprising a computer instruction, wherein when the computer instruction runs on a device, the device is enabled to perform the method for creating an album title according to any one of claims 1 to 9.

32. A computer program product, wherein when the computer program product runs on a computer, the computer is enabled to perform the method for creating an album title according to any one of claims 1 to 9.

<u>100</u>

102 — Radio frequency circuit

Wi-Fi apparatus — 107

101 —

108 — Positioning apparatus

111 — Power supply apparatus

103 — Memory

110 — Peripheral interface

Processor

109

Audio circuit

113

114

Bluetooth apparatus — 105

Sensor — 106

Fingerprint recognizer — 112

104

104-1 — Touchpad — Display — 104-2

FIG. 1

201

202

a — Picture label: seaside, beach, sky, and JPEG label

b — Picture label: seaside, sky, fishing, and JPEG label

c — Picture label: seaside, setting sun, beach, and JPEG label

...

d — Picture label: beach, swimming, walking, and JPEG label

Picture label →

Determine an album label

Album label (for example, seaside and beach)

203

Album title →

204

Album title ←

Target language model library

Target language model library →

Prestored language model library

For example, walking on the beach, and setting sun at the seaside

203

Prestored language model library

| Language model library 1 | Language model library 2 |
|---|---|
| Language model library 3 | Language model library 4 |

...

FIG. 2

A device generates an album label of a first album based on content of a picture in the first album

S301

The device determines a first language model library based on the album label of the first album, where the first language model library corresponds to the label of the first album, and includes a plurality of primitive word segments

S302

The device searches the first language model library for a primitive word segment that matches the album label of the first album

S303

The device creates an album title of the first album based on the matched primitive word segment

S304

FIG. 3

FIG. 4

FIG. 5

S301

A device generates an album label of a first album based on content of a picture in the first album

S302

The device determines the first language model library from a prestored language model library based on the album label of the first album, where the prestored language model library includes a language model library of each of a preset plurality of scenarios, and the first language model library is a language model library of a scenario corresponding to the album label of the first album

S302a

S303

The device searches the first language model library for a primitive word segment that matches the album label of the first album

S304

The device creates an album title of the first album based on the matched primitive word segment

FIG. 6

201

202

Album label (for example, seaside and beach)

Picture label: seaside, beach, \sky, and JPEG label

Picture label: seaside, sky, fishing, and JPEG label

Picture label: seaside, setting sun, beach, and JPEG label

...

Picture label: beach, swimming, walking, and JPEG label

Picture label

Determine an album label

701

Preset plurality of scenarios

A scenario (for example, a travel scenario) corresponding to an album

Album label

204

Target language model library

Target language model library

203

Album title

For example, walking on the beach, and setting sun at the seaside

Target language model library

Prestored language model library

203

Prestored language model library

| Language model library 1 | Language model library 2 |
|---|---|
| Language model library 3 | Language model library 4 |

...

FIG. 7

203

| Language model library 1 | | | | |
|---|---|---|---|---|
| Primitive word segment | Conditional probability | | | |
| | Primitive word segment a | Primitive word segment b | ... | Primitive word segment c |
| Primitive word segment a | Conditional probability 1 | Conditional probability 4 | ... | Conditional probability 7 |
| Primitive word segment b | Conditional probability 2 | Conditional probability 5 | ... | Conditional probability 8 |
| ... | ... | ... | ... | ... |
| Primitive word segment c | Conditional probability 3 | Conditional probability 6 | | Conditional probability 9 |

Scenario 1 (for example, a travel scenario)

| Language model library 2 |
|---|
| Primitive word segment and a conditional probability |

Scenario 2 (for example, a food scenario)

...

FIG. 8

S301

A device generates an album label of a first album
based on content of a picture in the first album

S302

The device determines a first language model library based
on the album label of the first album, where the first
language model library corresponds to the label of the first
album, and includes a plurality of primitive word segments

S303

S303a

The device searches a plurality of primitive word segments
in the first language model library for a first primitive word
segment that matches the album label of the first album

S303b

The device searches the first language model library
for a second primitive word segment, where a conditional
probability of the second primitive word segment to the
first primitive word segment is greater than a first
preset threshold

S304

S304a

The device searches the first language model library
for a second primitive word segment, where a conditional
probability of the second primitive word segment to the
first primitive word segment is greater than a first
preset threshold

FIG. 9

FIG. 10

FIG. 11

A device obtains a corpus of each of a preset plurality of scenarios, where the corpus of the scenario includes a plurality of pieces of corpus data of the scenario —— S1201

The device performs S1202 to S1205 on each corpus

The device performs word segmentation on all corpus data in a corpus to obtain a plurality of third primitive word segments —— S1202

The device collects statistics on a frequency at which each of the plurality of third primitive word segments occurs in the corpus and a frequency at which each of a plurality of phrase pairs occurs in the corpus, where the phrase pair includes two third primitive words adjacent in a preset order in same corpus data —— S1203

The device calculates, based on the frequency at which each third primitive word segment occurs in the corpus and the frequency at which each phrase pair occurs in the corpus, a conditional probability of each third primitive word segment to other third primitive words —— S1204

The device generates a language model library corresponding to a scenario of the corpus, where the corresponding language model library includes the plurality of third primitive word segments and the conditional probability of each third primitive word segment to other third primitive word segments —— S1205

The device generates an album label of a first album based on content of a picture in the first album —— S301

The device determines the first language model library from a prestored language model library based on the album label of the first album, where the prestored language model library includes a language model library of each of a preset plurality of scenarios, and the first language model library is a language model library of a scenario corresponding to the album label of the first album —— S302a

The device searches the first language model library for a primitive word segment that matches the album label of the first album —— S303

The device creates an album title of the first album based on the matched primitive word segment —— S304

FIG. 12

FIG. 13

1310

Corpus set

| Corpus 1 (Scenario 1) | Corpus 2 (Scenario 2) | Corpus 3 | Corpus 4 |

...

1320

Dictionary database

| Dictionary 1 | Dictionary 2 | Dictionary 3 | Dictionary 4 |

...

203

Prestored language model library

| Language model library 1 (Scenario 1) | Language model library 2 (Scenario 2) | Language model library 3 | Language model library 4 |

...

FIG. 14

FIG. 15

FIG. 16

1700

Apparatus for generating an album

Label generation unit 1701

Determining unit 1702

Search unit 1703

Title creation unit 1704

FIG. 17

1700

Apparatus for generating an album

Label generation unit 1701

Determining unit 1702

Search unit 1703

Title creation unit 1704

Model generation unit 1706

Corpus obtaining unit 1705

FIG. 18

1900

Device

Storage module 1902

Processing module 1901

Display module 1903

FIG. 19

## INTERNATIONAL SEARCH REPORT

| International application No. |
| --- |
| **PCT/CN2017/114499** |

**A.  CLASSIFICATION OF SUBJECT MATTER**

G06F 17/30(2006.01)i

According to International Patent Classification (IPC) or to both national classification and IPC

**B.  FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 相册, 标题, 名字, 取名, 起名, 图片, 标签, 分词, 匹配, 模型, 查询, photo, album, naming, label, name, image, model, word, match, segmentation

**C.  DOCUMENTS CONSIDERED TO BE RELEVANT**

| Category* | Citation of document, with indication, where appropriate, of the relevant passages | Relevant to claim No. |
| --- | --- | --- |
| A | CN 105528450 A (BEIJING QIHOO TECHNOLOGY CO., LTD. ET AL.) 27 April 2016 (2016-04-27) claims 1-10 | 1-32 |
| A | CN 105956080 A (LE HOLDINGS (BEIJING) CO., LTD. ET AL.) 21 September 2016 (2016-09-21) entire document | 1-32 |
| A | CN 106339479 A (SHENZHEN GIONEE COMMUNICATION EQUIPMENT CO., LTD.) 18 January 2017 (2017-01-18) entire document | 1-32 |
| A | CN 103631819 A (HUAWEI TECHNOLOGIES CO., LTD.) 12 March 2014 (2014-03-12) entire document | 1-32 |
| A | US 2014022572 A1 (XEROX CORPORATION) 23 January 2014 (2014-01-23) entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 August 2018** | **05 September 2018** |

| Name and mailing address of the ISA/CN | Authorized officer |
| --- | --- |
| **State Intellectual Property Office of the P. R. China (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2017/114499**

| Patent document cited in search report | | | Publication date (day/month/year) | Patent family member(s) | Publication date (day/month/year) |
|---|---|---|---|---|---|
| CN | 105528450 | A | 27 April 2016 | None | |
| CN | 105956080 | A | 21 September 2016 | None | |
| CN | 106339479 | A | 18 January 2017 | None | |
| CN | 103631819 | A | 12 March 2014 | None | |
| US | 2014022572 | A1 | 23 January 2014 | None | |

Form PCT/ISA/210 (patent family annex) (January 2015)